(19) **Europäisches Patentamt / European Patent Office / Office européen des brevets**

(11) **EP 4 663 450 A1**

(12) # EUROPEAN PATENT APPLICATION

(43) Date of publication:
**17.12.2025 Bulletin 2025/51**

(21) Application number: **25181792.0**

(22) Date of filing: **10.06.2025**

(51) International Patent Classification (IPC):
**B60K 6/445** (2007.10)  **B60K 6/448** (2007.10)
**B60K 6/52** (2007.10)  **B60W 10/06** (2006.01)
**B60W 10/08** (2006.01)  **B60W 20/00** (2016.01)
**B60W 20/17** (2016.01)  **B60W 20/40** (2016.01)
**B60K 6/26** (2007.10)

(52) Cooperative Patent Classification (CPC):
**B60W 10/06; B60K 6/26; B60K 6/445; B60K 6/448; B60K 6/52; B60W 10/08; B60W 20/00; B60W 20/17; B60W 20/40;** B60K 2006/268; B60W 2710/083

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.06.2024 JP 2024097057**

(71) Applicant: **TOYOTA JIDOSHA KABUSHIKI KAISHA**
**Toyota-shi, Aichi-ken 471-8571 (JP)**

(72) Inventors:
• **IMAMURA, Tatsuya**
 **Aichi-ken, 471-8571 (JP)**
• **YOSHINO, Hirotsugu**
 **Aichi-ken, 471-8571 (JP)**
• **SUZUKI, Yosuke**
 **Aichi-ken, 471-8571 (JP)**

(74) Representative: **D Young & Co LLP**
**3 Noble Street**
**London EC2V 7BQ (GB)**

(54) ## DRIVE APPARATUS FOR VEHICLE

(57)      A drive apparatus (10;310;410;510) for a vehicle (8;300;400;500), including: an engine (20); first through third electric motors (MG1,MG2,MG3); a differential mechanism (32;332;432;532); a first drive shaft (38) for driving front wheels (12f); a second drive shaft (58) for driving rear wheels (12r); and a processor (70). The differential mechanism (32;332;432;532) includes first through third rotary elements (RE1,RE2,RE3). The engine (20) and the first electric motor (MG1) are connected to the first rotary element (RE1). The second electric motor (MG2) is connected to the second rotary element (RE2). The first drive shaft (38) is connected to the third rotary element (RE3). When the engine (20) is to be started during running of the vehicle (8;300;400;500), the processor is configured to cause the first electric motor (MG1) to generate an engine starting torque (Tg) and to cause the second electric motor (MG2) to generate a resisting torque (T2r) that acts in a direction resisting an inertial torque (I2×dω2/dt) generated in the second rotary element (RE2) due to change in a rotational speed of the second rotary element (RE2).

FIG.1

**Description**

FIELD OF THE INVENTION

The present invention relates to a drive apparatus for a vehicle, wherein the drive apparatus includes an engine, three electric motors, a differential mechanism, drive shafts for driving front and rear wheels of the vehicle, and a control apparatus.

BACKGROUND OF THE INVENTION

There is well known a drive apparatus for a vehicle, which includes: an engine; a first electric motor; a second electric motor; a third electric motor; a differential mechanism; a first drive shaft for driving one of front and rear wheels of the vehicle; a second drive shaft for driving the other of the front and rear wheels; and a control apparatus. For example, JP 2018-149917A discloses such a drive apparatus. In the drive apparatus disclosed in this Japanese Patent Application Publication, the differential mechanism includes four rotary elements consisting of a first rotary element, a second rotary element, a third rotary element and a fourth rotary element. Further, in the disclosed drive apparatus, the engine is connected to the first rotary element, the first electric motor is connected to the second rotary element, the second electric motor is connected to the third rotary element, and the first drive shaft is connected to the fourth rotary element. In addition, in the disclosed drive apparatus, the third electric motor is connected to the second drive shaft. In the disclosed drive apparatus, when the engine is to be started during running of the vehicle with the engine being stopped, the first and second electric motors are controlled to output a torque acting in a direction that increases a rotational speed of the engine.

SUMMARY OF THE INVENTION

By the way, in the drive apparatus disclosed in the above-identified Japanese Patent Application Publication, a compound split mode and an input split mode can be established. In the compound split mode, one of the first and second electric motors is operated to serve as an electric generator, and the other of the first and second electric motors is operated to serve as a prime mover to drive the first drive shaft, while the engine is operated. In the input split mode, one of the first and second electric motors is operated to serve as the electric generator, and the third electric motor is operated to serve as the prime mover to drive the second drive shaft, while the engine is operated. However, when the vehicle is caused to run with the engine being operated, the first or second electric motor is caused to generate a torque acting against the torque of the engine, so that vibration of the torque of the engine is transmitted to the first drive shaft whereby a body of the vehicle is likely to be vibrated.

The present invention was made in view of the background art described above. It is therefore an object of the present invention to provide a drive apparatus for a vehicle, wherein the drive apparatus is capable of reducing vibration of a body of the vehicle when the vehicle is cause to run with an engine being operated, while preventing reduction of performance for starting the engine so as to enable the engine to be appropriately, during running of the vehicle.

The object indicated above is achieved according to the following aspects of the present invention.

According to a first aspect of the invention, there is provided a drive apparatus for a vehicle. The drive apparatus includes: (a) an engine; (b) a first electric motor; (c) a second electric motor; (d) a third electric motor; (e) a differential mechanism; (f) a first drive shaft for driving one of front and rear wheels of the vehicle; (g) a second drive shaft for driving the other of the front and rear wheels; and (h) a control apparatus including a processor. The differential mechanism includes a first rotary element, a second rotary element and a third rotary element. The engine and the first electric motor are connected to the first rotary element, the second electric motor is connected to the second rotary element, and the first drive shaft is connected to the third rotary element. The third electric motor is connected to the second drive shaft. When performing a running-stage engine start for starting the engine during running of the vehicle, the processor is configured to cause the first electric motor to generate an engine starting torque and to cause the second electric motor to generate a resisting torque that acts in a direction resisting an inertial torque generated in the second rotary element due to change in a rotational speed of the second rotary element.

According to a second aspect of the invention, in the drive apparatus according to the first aspect of the invention, when performing the running-stage engine start, the processor is configured to cause the second electric motor to generate, as the resisting torque, an offsetting torque that offsets the inertial torque.

According to a third aspect of the invention, in the drive apparatus according to the first aspect of the invention, when performing the running-stage engine start, the processor is configured to cause the second electric motor to generate, as the resisting torque, an engine-start accelerating torque which is larger than the inertial torque and which acts in the direction that resists the inertial torque.

According to a fourth aspect of the invention, in the drive apparatus according to the third aspect of the invention, when performing the running-stage engine start, the processor is configured to cause the third electric motor to generate an offsetting torque that offsets a fluctuated torque generated in the first drive shaft due to generation of the engine-start accelerating torque.

In the drive apparatus according to the first aspect of the invention, the differential mechanism includes three rotary elements consisting of the first through third rotary elements. The engine and the first electric motor are connected to the first rotary element. The second electric motor is connected to the second rotary element, and the first drive shaft is connected to the third rotary element. The third electric motor is connected to the second drive shaft. When the vehicle is caused to run with the engine being operated, the first electric motor, which is connected to the same rotary element as the engine, is operated as an electric generator, and the third electric motor is operated as a prime mover by an electric power generated by the first electric motor, whereby the second drive shaft is driven, so as to perform a so-called series driving. In the series driving, torque vibration of the engine can be prevented from being transmitted to the first drive shaft, so that a body of the vehicle is less likely to be vibrated when the vehicle is caused to run with the engine being operated. Further, when the engine is to be started during running of the vehicle with the engine being stopped, a rotational speed of the second electric motor, which is connected to the engine through the differential mechanism, is changed by increase of a rotational speed of the engine, so that the inertia torque generated due to the change of the rotational speed of the second electric motor is transmitted to a crankshaft of the engine and acts as a load against start of the engine, thereby causing a rick of reduction of startability of the engine. In the drive apparatus according to the first aspect of the invention, when performing a running-stage engine start for starting the engine during running of the vehicle, the processor is configured to cause the first electric motor to generate the engine starting torque and to cause the second electric motor to generate the resisting torque that acts in the direction resisting the inertial torque generated in the second rotary element due to the change in the rotational speed of the second rotary element. Thus, when the running-stage engine start is to be performed, the resisting torque is generated by the second electric motor in addition of the generation of the engine starting torque by the first electric motor, wherein the resisting torque acts in the direction resisting the inertial torque. Therefore, the startability of the engine can be prevented from being reduced due to the inertial torque generated in the second rotary element, and the engine can be started appropriately during running of the vehicle.

In the drive apparatus according to the second aspect of the invention, when performing the running-stage engine start, the processor is configured to cause the second electric motor to generate, as the resisting torque, the offsetting torque that offsets the inertial torque. Thus, the engine starting torque of the first electric motor can be used for the engine starting without reducing the engine starting torque.

In the drive apparatus according to the third aspect of the invention, when performing the running-stage engine start, the processor is configured to cause the second electric motor to generate, as the resisting torque, the engine-start accelerating torque which is larger than the inertial torque and which acts in the direction that resists the inertial torque. Thus, the engine starting torque is assisted by the engine-start accelerating torque generated by the second electric motor, whereby the startability of the engine can be increased.

In the drive apparatus according to the fourth aspect of the invention, when performing the running-stage engine start, the processor is configured to cause the third electric motor to generate the offsetting torque that offsets the fluctuated torque generated in the first drive shaft due to generation of the engine-start accelerating torque. Thus, it is possible to suppress the acceleration of the vehicle caused by the engine-start accelerating torque generated by the second electric motor.

BRIEF DESCRIPTION OF THE DRAWINGS

FIG 1 is a view schematically showing a construction of a vehicle provided with a vehicle drive apparatus (single pinion_U/D type) to which the present invention is applied;
FIG 2 is a view showing a construction of the vehicle drive apparatus, by using a collinear diagram;
FIG 3 is a view showing main parts of a control system for various controls in the vehicle drive apparatus;
FIG 4 is a collinear diagram for explaining BEV mode in which each of first and second electric motors is caused to generate a torque;
FIG 5 is a collinear diagram for explaining BEV mode in which the second electric motor is caused to generate the torque, with a brake being in its engaged state;
FIG 6 is a collinear diagram for explaining BEV mode in which a third electric motor is caused to generate the torque, with the brake being in the engaged state;
FIGS. 7A and 7B are collinear diagrams for explaining first HEV mode (series mode) in which an engine is driven and rotated, and an electric power is transferred between the first and third electric motors, wherein FIG 7A shows a case in which the third electric motor is caused to generate the torque by the electric power generated by the first electric motor, and FIG 7B shows a case in which an engine brake is generated by a power driving of the first electric motor that consumes the electric power generated by the third electric motor;

FIGS. 8A and 8B are collinear diagrams for explaining second HEV mode (input split mode) in which the engine is operated whereby the electric power is transferred between the second and third electric motors, wherein FIG 8A shows a case in which the third electric motor is caused to generate the torque by the electric power generated by the second electric motor, and FIG 8B shows a case in which the second electric motor is caused to generate the torque by the electric power generated by the third electric motor;

FIGS. 9A and 9B are collinear diagrams for explaining third HEV mode (output split mode) in which the engine is operated whereby the electric power is transferred between the first and second electric motors, wherein FIG 9A shows a case in which the second electric motor is caused to generate the torque by the electric power generated by the first electric motor, and FIG 9B shows a case in which the first electric motor is caused to generate the torque by the electric power generated by the second electric motor;

FIG 10 is a view showing an example of a drive-mode switching map to be used for controlling switching of a drive mode of the vehicle, wherein this example is to be used in a charged-power consuming driving;

FIG 11 is a view showing an example of the drive-mode switching map to be used for controlling switching of the drive mode, wherein this example is to be used in a charged-power maintaining driving;

FIG 12 is a view showing an example of the drive-mode switching map to be used for controlling switching of the drive mode, wherein this example is to be used in the charged-power consuming driving, and wherein a drive power (shown in FIG 10) is replaced by an accelerator opening degree;

FIG 13 is a view showing an example of the drive-mode switching map to be used for controlling switching of the drive mode, wherein this example is to be used in the charged-power maintaining driving, and wherein the drive power (shown in FIG 11) is replaced by the accelerator opening degree;

FIG 14 is a collinear diagram for explaining operations of respective rotary elements in a comparative example, in a control for starting the engine during running of the vehicle;

FIG 15 is a collinear diagram for explaining operations of the respective rotary elements in a case in which the second electric motor is caused to generate a resisting torque acting in a direction resisting an inertial torque, in the control for starting the engine during running of the vehicle;

FIG 16 is a collinear diagram for explaining operations of the respective rotary elements in a case in which the second electric motor is caused to generate an engine-start accelerating torque larger than the inertial torque, in the control for starting the engine during running of the vehicle;

FIG 17 is a flow chart showing main parts of control operation of an electronic control apparatus, namely, a control routine executed by the electronic control apparatus in the control for starting the engine during running of the vehicle;

FIG 18 is a time chart in the control for starting the engine during running of the vehicle, in a case in which the second electric motor is caused to generate an offsetting torque that offsets the inertial torque;

FIG 19 is a time chart in a case in which the offsetting torque (shown in FIG 18) is increased to the engine-start accelerating torque that is larger than the inertial torque;

FIG 20 is a view schematically showing a construction of a vehicle provided with a vehicle drive apparatus (single pinion_U/D type) to which the present invention is applied, wherein the vehicle and the vehicle drive apparatus are other than those shown in FIG 1;

FIG 21 is a view showing a construction of the vehicle drive apparatus shown in FIG 20, by using a collinear diagram;

FIG 22 is a collinear diagram for explaining operations of the respective rotary elements in a case in which the second electric motor is caused to generate the resisting torque acting in a direction resisting the inertial torque, in the control for starting the engine during running of the vehicle, which is executed by the electronic control apparatus provided in the vehicle drive apparatus shown in FIG 20;

FIG 23 is a collinear diagram for explaining operations of the respective rotary elements in a case in which the second electric motor is caused to generate the engine-start accelerating torque larger than the inertial torque, in the control for starting the engine during running of the vehicle, which is executed by the electronic control apparatus provided in the vehicle drive apparatus shown in FIG 20;

FIG 24 is a view schematically showing a construction of a vehicle provided with a vehicle drive apparatus (double pinion_U/D type) to which the present invention is applied, wherein the vehicle and the vehicle drive apparatus are other than those shown in FIG 1;

FIG 25 is a view showing a construction of the vehicle drive apparatus shown in FIG 24, by using a collinear diagram;

FIG 26 is a collinear diagram for explaining operations of the respective rotary elements in a case in which the second electric motor is caused to generate the resisting torque acting in a direction resisting the inertial torque, in the control for starting the engine during running of the vehicle, which is executed by the electronic control apparatus provided in the vehicle drive apparatus shown in FIG 24;

FIG 27 is a collinear diagram for explaining operations of the respective rotary elements in a case in which the second electric motor is caused to generate the engine-start accelerating torque larger than the inertial torque, in the control for starting the engine during running of the vehicle, which is executed by the electronic control apparatus provided in the vehicle drive apparatus shown in FIG 24;

FIG 28 is a view schematically showing a construction of a vehicle provided with a vehicle drive apparatus (double pinion_U/D type) to which the present invention is applied, wherein the vehicle and the vehicle drive apparatus are other than those shown in FIG 1;

FIG 29 is a view showing a construction of the vehicle drive apparatus shown in FIG 28, by using a collinear diagram;

FIG 30 is a collinear diagram for explaining operations of the respective rotary elements in a case in which the second electric motor is caused to generate the resisting torque acting in a direction resisting the inertial torque, in the control for starting the engine during running of the vehicle, which is executed by the electronic control apparatus provided in the vehicle drive apparatus shown in FIG 28; and

FIG 31 is a collinear diagram for explaining operations of the respective rotary elements in a case in which the second electric motor is caused to generate the engine-start accelerating torque larger than the inertial torque, in the control for starting the engine during running of the vehicle, which is executed by the electronic control apparatus provided in the vehicle drive apparatus shown in FIG 28.

DETAILED DESCRIPTION OF PREFERRED EMBODIMENTS

Hereinafter, embodiments of the invention will be described in detail with reference to the accompanying drawings.

FIRST EMBODIMENT

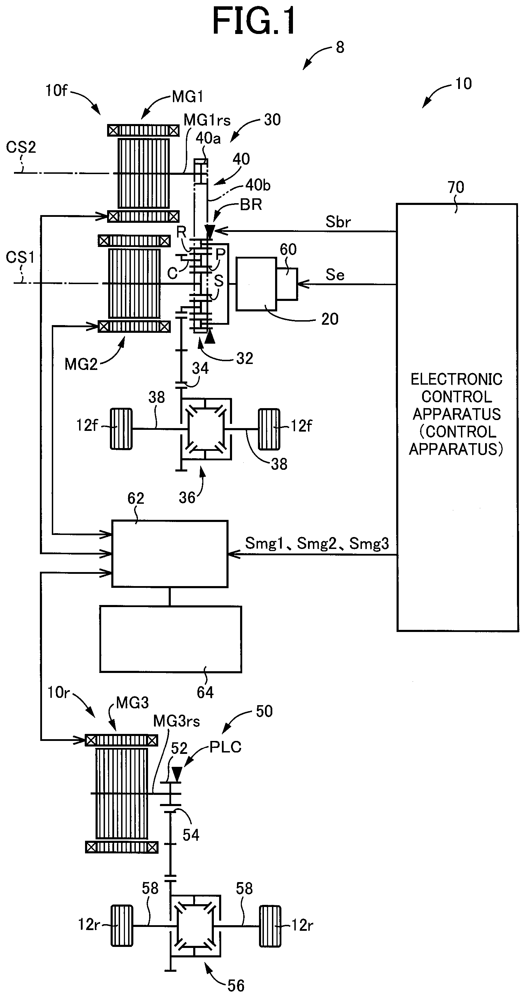

FIG 1 is a view schematically showing a construction of a vehicle 8 provided with a vehicle drive apparatus 10 to which the present invention is applied. As shown in FIG 1, the vehicle 8 includes drive wheels 12 and a vehicle drive apparatus 10. The drive wheels 12 consist of front right and left wheels 12f and rear right and left wheels 12r. The vehicle drive apparatus 10 includes a front drive portion 10f for driving the front wheels 12f and a rear drive portion 10r for driving the rear wheels 12r. It is noted that the above "right and left" refers to right and left relative to a forward direction of vehicle 8.

The front drive portion 10f includes an engine 20, a first electric motor MG1, a second electric motor MG2 and a front power transmission device 30. The rear drive portion 10r includes a third electric motor MG3 and a rear power transmission device 50. The vehicle 8 is a hybrid vehicle (HEV (hybrid electric vehicle)) or a plug-in hybrid vehicle (PHEV (plug-in hybrid electric vehicle)), and is an all-wheel drive vehicle in which the front wheels 12f and the rear wheels 12r are can be driven independent from one another. All wheel drive (AWD) and four wheel drive (4WD) are synonymous to each other. The vehicle drive apparatus 10 is capable of performing a front wheel drive for transmitting a torque to only the front wheels 12f, and also a rear wheel drive for transmitting the torque to only the rear wheels 12r.

The engine 20 is a known internal combustion engine, for example. An engine torque Te, which is the torque of the engine 20, is controlled with an engine control device 60 being controlled by an electronic control apparatus 70 that corresponds to "control apparatus" recited in appended claims. The engine control device 60 is provided in the front drive portion 10f, and includes a throttle actuator, a fuel injection device and a fuel ignition device.

Each of the first electric motor MG1, second electric motor MG2 and third electric motor MG3 is a so-called motor generator, i.e., a rotary electric machine having a function serving as a prime mover configured to generate a mechanical power from an electric power and also a function serving as an electric generator configured to generate the electric power from the mechanical power. The first electric motor MG1, second electric motor MG2 and third electric motor MG3 are connected to a battery 64 provided in the vehicle drive apparatus 10, through an inverter 62 that is also provided in the vehicle drive apparatus 10. The torque of each of the first electric motor MG1, second electric motor MG2 and third electric motor MG3 is controlled with the inverter 62 being controlled by the electronic control apparatus 70. The torque of the first electric motor MG1, the torque of the second electric motor MG2 and the torque of the third electric motor MG3 will be referred to as "first electric motor torque Tmg1", "second electric motor torque Tmg2" and "third electric motor torque Tmg3", respectively. The torque of each electric motor serves as a power driving torque when the electric motor functions as the prime mover, and serves as a regenerative torque when the electric motor functions as the electric generator. The battery 64 is an electric-power storage device configured to supply and receive the electric power to and from the first electric motor MG1, second electric motor MG2 and third electric motor MG3. The first electric motor MG1, second electric motor MG2 and third electric motor MG3 are controlled through the inverter 62 such that the electric power is supplied and received to and from all of them simultaneously. The term "simultaneously" means that the first electric motor MG1, second electric motor MG2 and third electric motor MG3 are placed in power-driving or regeneration enabling states independently at the same time.

The front power transmission device 30 is provided in a power transmission path between the front wheels 12f and the power sources (i.e., the engine 20, first electric motor MG1 and second electric motor MG2). The front power transmission device 30 includes a differential mechanism 32, a front counter gear 34, a front differential gear device 36 and right and left front drive shafts 38. The differential mechanism 32 and the front differential gear device 36 are connected to each other through the front counter gear 34. The front drive shafts 38 are connected to the front differential gear device 36.

The front power transmission device 30 is configured to transmit the powers of the engine 20 and the second electric motor MG2, for example, to the front wheels 12f. Each of the front drive shafts 38 corresponds to "first drive shaft" which is recited in the appended claims and which is provided to drive the front wheel 12f as one of the front and rear wheels 12f, 12r.

The differential mechanism 32 is a single-pinion-type planetary gear device including a sun gear S, pinion gears P, a carrier C supporting the pinion gears P, and a ring gear R meshing with the sun gear S through the pinion gears P, such that each of the pinion gears P is rotatable about its axis and revolvable about a first axis CS1. The sun gear S is connected to the second electric motor MG2. The ring gear R is connected to the engine 20 and the first electric motor MG1. The carrier C meshes with the front counter gear 34, and is connected to the front drive shafts 38.

The engine 20 and the second electric motor MG2 are disposed on the first axis CS1 that is a rotation axis of the differential mechanism 32. The first electric motor MG1 is disposed on the second axis CS2. The second axis CS2 is a rotation axis other than the first axis CS1, and is parallel with the first axis CS1. The front power transmission device 30 further includes a power transmission mechanism 40. The first electric motor MG1 is connected to the ring gear R of the differential mechanism 32 through the power transmission mechanism 40. The power transmission mechanism 40 includes an intermediate gear 40a and a belt 40b. The intermediate gear 40a is fixed to, for example, a rotor shaft MG1rs of the first electric motor MG1 such that the intermediate gear 40a is unrotatable relative to the rotor shaft MG1rs. The belt 40b is provided to connect between the intermediate gear 40a and the ring gear R. The intermediate gear 40a has a smaller diameter than that of the ring gear R, so that the power transmission mechanism 40 serves as a reduction mechanism, for example. With the first electric motor MG1 being disposed on the second axis CS2, the front drive portion 10f has a smaller size than a case in which the first electric motor MG1 is disposed on the first axis CS1.

The front power transmission device 30 further includes a brake BR that is connected at an end portion thereof to the ring gear R of the differential mechanism 32 and is connected at another end portion thereof to a non-rotatable member (not shown). The non-rotatable member, to which the brake BR is connected, is, for example, a casing that houses the front power transmission device 30 and other devices or members. The brake BR is an engagement device that is to be operated by a hydraulically or electrically operation actuator, for example, and each of the opposite end portions is to be selectively connected and disconnected. The brake BR serves as a brake mechanism configured to selectively stop rotation of the ring gear R of the differential mechanism 32, so that the ring gear R is to be selectively rotatable and unrotatable by operation of the brake BR.

The rear power transmission device 50 is provided in a power transmission path between the third electric motor MG3 and the rear wheels 12r. The rear power transmission device 50 includes an output gear 52, a rear counter gear 54, a rear differential gear device 56 and right and left rear drive shafts 58. The output gear 52 meshes with the rear counter gear 54, and is fixedly disposed on a rotor shaft MG3rs of the third electric motor MG3 such that the output gear 52 is unrotatable relative to the rotor shaft MG3rs. The output gear 52 and the rear differential gear device 56 are connected to each other through the rear counter gear 54. The rear drive shafts 58 are connected to the rear differential gear device 56. The output gear 52 has a smaller diameter than that of the rear counter gear 54, so that the output gear 52 and the rear counter gear 54 cooperate with each other to constitute a reduction mechanism, for example. The rear power transmission device 50 configured to transmit the power of the third electric motor MG3 to the rear wheels 12r. Each of the rear drive shafts 58 corresponds to "second drive shaft" which is recited in the appended claims and which is provided to drive the rear wheel 12r as the other of the front and rear wheels 12f, 12r. The third electric motor MG3 is connected to the rear drive shafts 58.

The rear power transmission device 50 further includes a parking mechanism PLC. The parking mechanism PLC has an end portion connected to a non-rotatable member (not shown). The parking mechanism PLC is operated by, for example, an electrically-operated actuator or a manually-operated mechanical actuator, and has another end portion that is to be engaged with or disengaged from the output gear 52 by operation of the actuator. The non-rotatable member to which the parking mechanism PLC is connected is, for example, a casing that houses the rear power transmission device 50 and other devices and members. The parking mechanism PLC is a known parking lock device that switches between a parking lock state in which the output gear 52 is mechanically fixed so as to be unrotatable and a non-parking lock state in which the output gear 52 is rotatable. The output gear 52 is a rotary member that is to be rotated together with the rear drive shafts 58. The output gear 52 and rear drive shafts 58 are selectively rotatable and unrotatable by operation of the parking mechanism PLC.

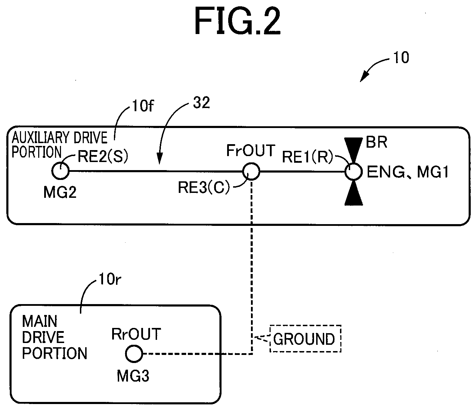

FIG 2 is a view showing a construction of the vehicle drive apparatus 10, by using a collinear diagram. The rear drive portion 10r is a main drive portion to be used for driving in preference to the front drive portion 10f, for example. Thus, the front drive portion 10f is to be used as an auxiliary drive portion. In FIG 2, "FrOUT" represents the front wheels 12f, and "RrOUT" represents the rear wheels 12r.

The differential mechanism 32 of the front drive portion 10f includes three rotary elements consisting of a first rotary element RE1, a second rotary element RE2 and a third rotary element RE3. Each of the rotary elements RE1-RE3 of the differential mechanism 32 is connected to an actuator. The collinear diagram of FIG 2 shows the three rotary elements of the differential mechanism 32 arranged in a straight line. Expressing using the collinear diagram, the first rotary element RE1 is the ring gear R. The first rotary element RE1 is connected to the engine 20 and the first electric motor MG1. The second rotary element RE2 is the sun gear S. The second rotary element RE2 is connected to the second electric motor MG2. The third rotary element RE3 is the carrier C. The third rotary element RE3 is connected to the front drive shafts 38, i.e., the front wheels 12f. The brake BR is a brake mechanism that is configured to stop rotation of the first rotary element RE1 by being placed in an engaged state. The differential mechanism 32 is constructed such that the first, second and third rotary elements RE1, ,RE2, RE3 are to be rotated about a common axis in the form of the first axis CS1 about which the engine 20 is to be rotated, and such that the third rotary element RE3, which is connected to the first drive shaft 38, is to be rotated at a rotational speed that is intermediate between the rotational speed of the second rotary element RE2 and the rotational speed of the first rotary element RE1.

The third electric motor MG3 of the rear drive portion 10r is connected to rear wheels 12r, and can therefore be considered to be connected to the front wheels 12f through a ground (see dashed line in FIG 2). It is possible to drive the vehicle 8 with the third electric motor MG3 being considered to be connected to the front wheels 12f, since the first, second and third electric motors MG1, MG2, MG3 are controlled such that the electric power is transferred among the first, second and third electric motors MG1, MG2, MG3 simultaneously.

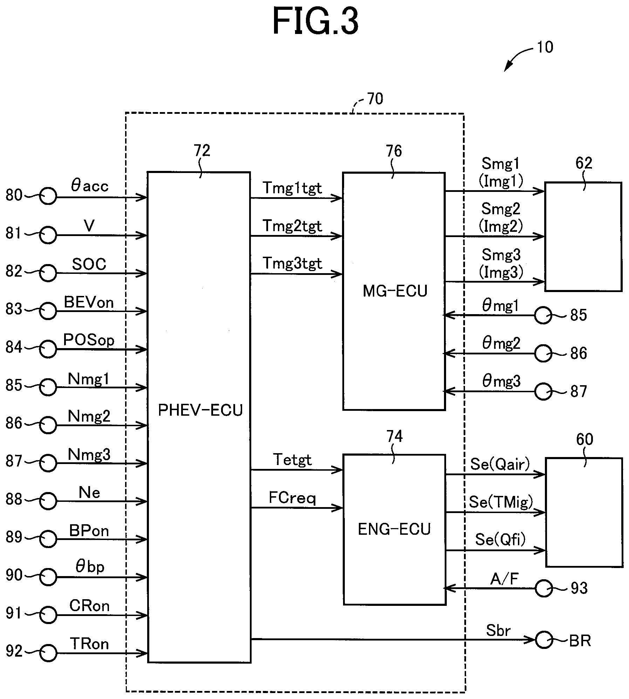

FIG 3 is a view showing main parts of a control system for various controls in the vehicle drive apparatus 10. As shown in FIGS. 1 and 3, the vehicle drive apparatus 10 is provided with the electronic control apparatus 70 as a controller including a processor that is configured to control the vehicle drive apparatus 10, for example. The electronic control apparatus 70 includes a so-called microcomputer incorporating a CPU, a ROM, a RAM and an input-output interface. The CPU performs various control operations of the vehicle 8, by processing various input signals, according to control programs stored in the ROM, while utilizing a temporary data storage function of the RAM. For example, the electronic control apparatus 70 controls outputs of the engine 20, the first electric motor MG1, the second electric motor MG2 and the third electric motor MG3, and also controls switching of a drive mode of the vehicle 8, which will be described later. The electronic control apparatus 70 is sectioned into a plurality of ECUs, as needed, which include a hybrid control ECU 72 (see "PHEV-ECU" shown in FIG 3), an engine control ECU 74 (see "ENG-ECU" shown in FIG 3) and an electric-motor control ECU 76 (see "MG-ECU " shown in FIG 3).

The hybrid control ECU 72 receives various input signals based on values detected by respective sensors provided in the vehicle 8. Specifically, the hybrid control ECU 72 receives: an output signal of an accelerator-opening degree sensor 80 indicative of an accelerator opening degree (accelerator operation degree) $\theta$acc; an output signal of a vehicle speed sensor 81 indicative a running speed V of the vehicle 8, an output signal of a battery sensor 82 indicative of a charged amount (state of charge) SOC; a BEV ON signal BEVon as an output signal of a BEV switch 83; an output signal of a shift position sensor 84 indicative of a shift operation position POSop; an output signal of a first-electric-motor speed sensor 85 indicative of a first electric motor speed Nmg1; an output signal of a second-electric-motor speed sensor 86 indicative of a second electric motor speed Nmg2; an output signal of a third-electric-motor speed sensor 87 indicative of a third electric motor speed Nmg3; an output signal of an engine speed sensor 88 indicative of an engine speed Ne; a brake ON signal BPon as an output signal of a brake switch 89; an output signal of a brake operation sensor 90 indicative of a brake operation amount $\theta$bp; a crawl ON signal CRon as an output signal of a crawl switch 91; and a towing ON signal TRon as an output signal of a towing switch 92.

The BEV switch 83 is a switch to be operated by a driver of the vehicle 8 when the drive requires a BEV driving of the vehicle 8. When the BEV switch 83 is operated, the BEV driving is performed with only the power of the battery 64 without the engine 20 being started. Each of the motor speed sensors 85, 86, 87 is constituted by a resolver, for example. The crawl switch 91 is a switch to be operated by the driver when a stage is anticipated in which the vehicle 8 runs at a very low speed with a high load on a rocky road, for example. The towing switch 92 is a switch to be operated by the driver when the vehicle 8 runs with a towed vehicle connected to a rear portion of the vehicle.

The accelerator opening degree $\theta$acc is an amount of accelerating operation made by the driver, which represents a magnitude of the accelerating operation made by the driver. The running speed V is a running speed of the vehicle 8. The charged amount SOC is represented by a battery charge/discharge current and/or a battery voltage, for example, detected by the battery sensor 82. The charged amount SOC is a remaining charge of the battery 64, and is calculated by the electronic control apparatus 70, based on the battery charge/discharge current and/or the battery voltage detected by the battery sensor 82. The battery sensor 82 also detects a temperature of the battery 64. The BEV ON signal BEVon is a signal indicating that the BEV switch 83 has been operated by the driver. The shift operation position POSop represents which one of lever positions such as "P", "R", "N", "D" a shift lever of a shift operation device is currently placed in. The first electric motor speed Nmg1 is a rotational speed of the first electric motor MG1. The second electric motor speed Nmg2 is a rotational speed of the second electric motor MG2. The third electric motor speed Nmg3 is a rotational speed of the third electric motor MG3. The engine rotational speed Ne is a rotational speed of engine 20. The brake ON signal BPon is a signal that indicates a state in which a brake pedal is being operated by the driver for activating wheel brakes. The brake operation amount $\theta$bp is a signal that indicates a magnitude of brake-pedal depression operation made by the driver, i.e., a magnitude of brake operation made by the driver, and is synonymous with a brake pedal depression force. The crawl ON signal CRo is a signal that indicates that crawl switch 91 has been operated by the driver. The towing ON signal TRo is a signal that indicates that the towing switch 92 has been operated by the driver.

The engine control ECU 74 and the electric-motor control ECU 76 also receive various input signals based on values detected by respective sensors provided in the vehicle 8. Specifically, the engine control ECU 74 receives an output signal of an air-fuel ratio sensor 93 indicative of an air-fuel ratio A/F, for example. The electric-motor control ECU 76 receives an output signal of the first-electric-motor speed sensor 85 indicative of a first-electric-motor rotational angle $\theta$mg1, an output signal of the second-electric-motor speed sensor 86 indicative of a second-electric-motor rotational angle $\theta$mg2 and an output signal of the third-electric-motor speed sensor 87 indicative of a third-electric-motor rotational angle $\theta$mg3.

The air-fuel ratio A/F indicates the air-fuel ratio in an exhaust gas. The first-electric-motor rotational angle $\theta$mg1 indicates a rotational angle of a rotor of the first electric motor MG1, from a predetermined reference position. The second-electric-motor rotational angle $\theta$mg2 indicates a rotational angle of a rotor of the second electric motor MG2, from a predetermined reference position. The third-electric-motor rotational angle $\theta$mg3 is indicates a rotational angle of a rotor of the third electric motor MG3, from a predetermined reference position.

The hybrid control ECU 72 outputs various command signals supplied to the engine control ECU 74. The various command signals supplied to the engine control ECU 74 include a command signal indicative of a target engine torque Tetgt and a fuel-cut request signal FCreq requesting a fuel cut operation. The hybrid control ECU 72 outputs various command signals supplied to the electric-motor control ECU 76. The various command signals supplied to the electric-motor control ECU 76 include a command signal indicative of a target first-electric -motor torque Tmg1tgt, a command signal indicative of a target second-electric-motor torque Tmg2tgt and a command signal indicative of a target third-electric-motor torque Tmg3tgt. Further, the hybrid control ECU 72 outputs a command signal such as a brake-control command signal Sbr that is supplied to the brake BR, for example.

The target engine torque Tetgt is a target value of the engine torque Te. The fuel cut operation is a control operation for cutting off supply of fuel to the engine 20. The target first-electric-motor torque Tmg1tgt is a target value of the first electric motor torque Tmg1. The target second-electric-motor torque Tmg2tgt is a target value of the second electric motor torque Tmg2. The target third-electric-motor torque Tmg3tgt is a target value of the third electric motor torque Tmg3. The brake-control command signal Sbr is a request signal for controlling the brake BR to its ON state or OFF state. It is noted that, in the engagement device, the ON state is synonymous with the engaged state (= connecting state), and the OFF state is synonymous with the released state (= disconnecting state).

The engine control ECU 74 outputs an engine-control command signal Se supplied to the engine control device 60, for example. The engine-control command signal Se is a command signal for controlling the engine 20, and includes control signals for controlling an intake air quantity Qair, an ignition timing TMig and a fuel injection quantity Qfi.

The electric-motor control ECU 76 outputs a first-electric-motor-control command signal Smg1, a second-electric-motor-control command signal Smg2 and a third-electric-motor-control command signal Smg3 that are supplied to the inverter 62, for example. The first-electric-motor-control command signal Smg1 is a command signal for controlling the first electric motor MG1, and includes a control signal for controlling a first electric motor current Img1. The second-electric-motor-control command signal Smg2 is a command signal for controlling the second electric motor MG2, and includes a control signal for controlling a second electric motor current Img2. The third-electric-motor-control command signal Smg3 is a command signal for controlling the third electric motor MG3, and includes a control signal for controlling a third electric motor current Img2. The first electric motor current Img1 is an electric current for driving the first electric motor MG1. The second electric motor current Img2 is an electric current for driving the second electric motor MG2. The third electric motor current Img3 is an electric current for driving the third electric motor MG3.

The hybrid control ECU 72 determines the various command signals, based on intentions of the driver represented by the accelerator opening degree $\theta$acc and the brake operation amount $\theta$bp, and also the first electric motor speed Nmg1, the second electric motor speed Nmg2, the third electric motor speed Nmg3 and the engine rotational speed Ne, for example. Specifically, the hybrid control ECU 72 determines the brake-control command signal Sbr, and controls an operation state of the brake BR so as to place the brake BR into the engaged state or the released state. The engine control ECU 74 determines the engine-control command signal Se, based on the command signal representing the target engine torque Tetgt and the fuel-cut request signal FCreq requesting the fuel cut operation. The engine control ECU 74 controls the engine 20 by outputting the engine-control command signal Se. The electric-motor control ECU 76 determines the first, second and third electric-motor-control command signals Smg1, Smg2, Smg3, based on the target first-electric-motor torque Tmg1tgt, the target second-electric-motor torque Tmg2tgt and the target third-electric-motor torque Tmg3tgt. The electric-motor control ECU 76 outputs the first, second and third electric-motor-control command signals Smg1, Smg2, Smg3, and controls the first, second and third electric motors MG1, MG2, MG3.

Thus, the electronic control apparatus 70 is configured to control the engine 20 and the first through third electric motors MG1, MG2, MG3, and to place the drive mode of the vehicle 8 into a selected one of a plurality of modes. Further, the electronic control apparatus 70 controls the brake BG such that the brake BG is placed in the engaged state, as needed, upon switching of the drive mode.

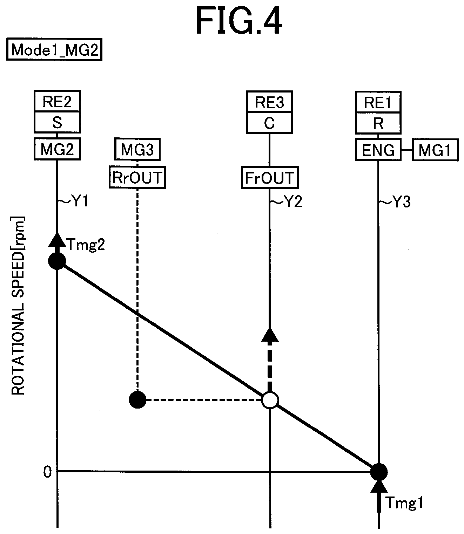

The plurality of modes into which the drive mode of the vehicle 8 can be placed, will be described with reference to FIGS. 4-9. Each of FIGS. 4-9 shows relative rotational speeds of the rotary elements RE1-RE3 of the differential mechanism 32 in the collinear diagram of FIG 2. In collinear diagram of each of FIGS. 4-9, vertical lines Y1-Y3 are arranged in this order as seen from a left side in each of FIGS. 4-9. The vertical line Y1 represents the rotational speed of the sun gear S as the second rotary element RE2 to which the second electric motor MG2 is connected. The vertical line Y2 represents the rotational speed of the carrier C as the third rotary element RE3 to which the front wheels 12f (see "FrOUT" in each of FIGS. 4-9) are connected. The vertical line Y3 represents the rotational speed of the ring gear R as the first rotary element RE1 to which the engine 20 (see "ENG" in each of FIGS. 4-9) and the first electric motor MG1 are connected. Each of FIGS. 4-9 also shows that the third electric motor MG3 connected to the rear wheels 12r (see "RrOUT" in each of FIGS. 4-9) is connected to the front wheels 12f through the ground. Further, each arrow shows the magnitude and direction of the torque converted onto an axis of a corresponding one of the rotary element RE1-RE3, and each solid arrow shows the torque outputted by the corresponding actuator while dashed arrow shows the torque transmitted mechanically.

FIG 4 is a collinear diagram for explaining Mode1_MG2, i.e., BEV mode as one of kinds of the Mode1 enabling the BEV driving, in which each of the first and second electric motors MG1, MG2 is caused to generate the torque. The Mode1 MG2 is one of the plurality of modes into which the drive mode of the vehicle 8 can be placed. In the Mode1_MG2, the BEV driving is performed, with each of the first and second electric motors MG1, MG2 being caused to generate the torque, and with the engine 20 being stopped. In the Mode1_MG2, each of the first and second electric motors MG1, MG2 supplies and receives the electric power to and from the battery 64, generating the torque, such that a moment around the third rotary element RE3 becomes zero thereby enabling the BEV driving. In this instance, the first electric motor torque Tmg1 is controlled such that drag of engine 20 does not occur, namely, such that the rotational speed of the first rotary element RE1 becomes zero. In the Mode1_MG2, the differential mechanism 32 is in a differential state, and the torque is generated from each of the first and second electric motors MG1, MG2, whereby the torque is mechanically transmitted to the third rotary element RE3 as an output element. It is noted that, in the Mode1_MG2, it is also possible to increase the drive torque by causing the third electric motor MG3 to generate the torque.

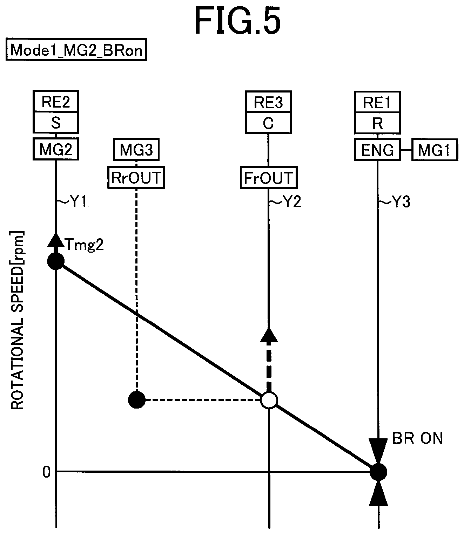

FIG 5 is a collinear diagram for explaining Mode1_MG2_BRon, i.e., BEV mode as another one of kinds of the Mode1 enabling the BEV driving, in which the second electric motor MG2 is caused to generate the torque, with the brake BR being in the engaged state. The Mode1 MG2_BRon is one of the plurality of modes into which the drive mode of the vehicle 8 can be placed. In the Mode1_MG2_BRon, the BEV driving is performed, with the second electric motor MG2 being caused to generate the torque, with the brake BR being in the engaged state, and with the engine 20 being stopped. In the Mode1_MG2_BRon, the brake BR is placed in the engaged state whereby the rotational speed of the first rotary element RE1 is fixed to zero, so that the BEV driving in either forward or reverse direction is enabled by the second electric motor MG2 with the electric power supplied from the battery 64 without the first electric motor MG1 being caused to generate the torque. In this instance, the BEV driving is enabled with a maximum torque of the second electric motor MG2. In the Mode1_MG2_BRon, the differential mechanism 32 is in the differential state, and the torque is generated from the second electric motor MG2, whereby the torque is mechanically transmitted to the third rotary element RE3 as the output element. It is noted that, in the Mode1_MG2_BRon, it is also possible to increase the drive torque by causing the third electric motor MG3 to generate the torque.

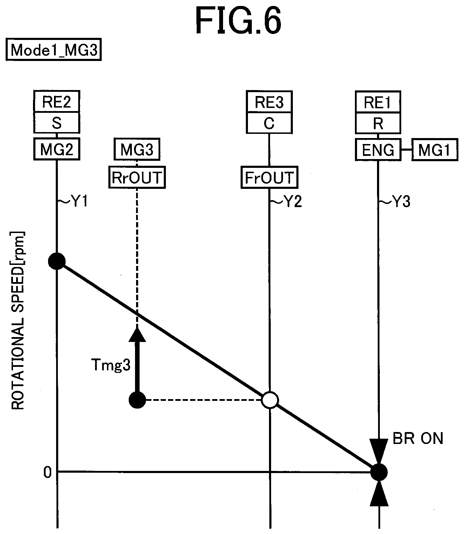

FIG 6 is a collinear diagram for explaining Mode1_MG3, i.e., BEV mode as still another one of kinds of the Mode1 enabling the BEV driving, in which the third electric motor MG3 is caused to generate the torque, with the brake BR being in the engaged state. The Mode1_MG3 is one of the plurality of modes into which the drive mode of the vehicle 8 can be placed. In the Mode1_MG3, the BEV driving is performed, with the third electric motor MG3 being caused to generate the torque, with the brake BR being in the engaged state, and with the engine 20 being stopped. In the Mode1_MG3, the brake BR is placed in the engaged state whereby the rotational speed of the first rotary element RE1 is fixed to zero, so that the BEV driving in either forward or reverse direction is enabled by the third electric motor MG3 with the electric power supplied from the battery 64 without the engine 20 and the first electric motor MG1 being dragged.

It is noted that, in the Mode1_MG3, it is also possible to increase the drive torque by causing the second electric motor MG2 to generate the torque. Further, in the Mode1_MG3, the BEV driving can be performed also by causing the third electric motor MG3 to generate the torque, even without the brake BR being placed in the engaged state. That is, the Mode1_MG3 may be also a mode in which the BEV driving is performed with the third electric motor MG3 being caused to generate the torque and with the engine 20 being stopped.

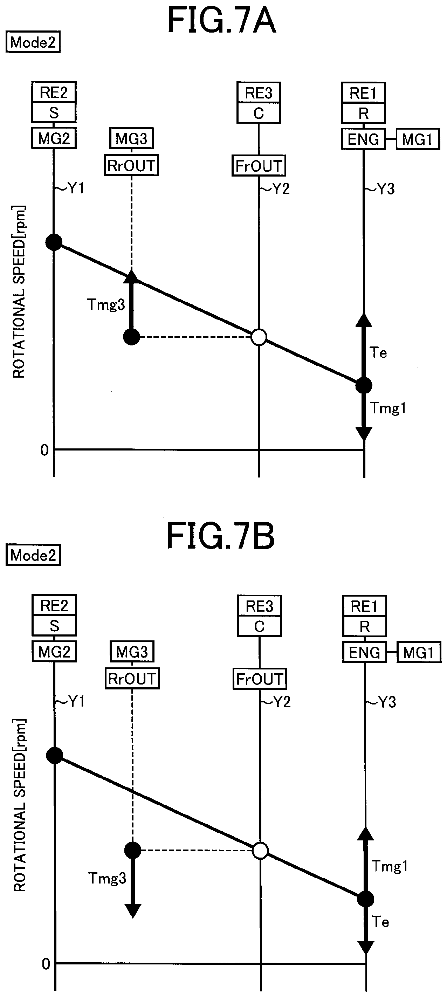

FIGS. 7A and 7B are collinear diagrams for explaining first HEV mode, i.e., Mode2 in which the engine 20 is driven and rotated , and the electric power is transferred between the first and third electric motors MG1, MG2, wherein FIG 7A shows a case in which the third electric motor MG3 is caused to generate the torque by the electric power generated by the first electric motor MG1, and FIG 7B shows a case in which an engine brake is generated by a power driving of the first electric motor MG1 that consumes the electric power generated by the third electric motor MG3. The Mode2 is one of the plurality of modes into which the drive mode of the vehicle 8 can be placed. The Mode2 is a mode enabling a hybrid driving, i.e., HEV driving, and is a series mode enabling a series driving with the engine 20 as the power source.

In the case shown in FIG 7A, the Mode2 includes a mode in which the first electric motor MG1 is operated as the electric generator by operation of the engine 20, and the third electric motor MG3 is operated as the prime mover by the electric power generated by the first electric motor MG1. The Mode2 is a mode that can realize an electric-continuously-variable transmission function that performs a series mode operation in which the power inputted by the engine 20 is outputted to the rear wheels 12r with the brake BR being placed in the released state. In the Mode2, a power conversion is made between the engine 20 and the first electric motor MG1, and between the first electric motor MG1 and the third electric motor MG3. The power conversion means a conversion between the mechanical power and the electric power. In the Mode2, an explosive vibration torque of the engine 20 is not transmitted to the front drive shafts 38, so that the Mode2 is advantageous for suppressing NV. The term "NV" is a general term for noise and vibration such as muffled sound generated in the vehicle 8, and represents at least one of the noise and vibration in the vehicle 8. Therefore, the Mode2 is useful for use in a low running speed and low load range in which quietness is required. In addition, since the Mode2 is less subjected to restrictions such as the muffled sound when an operating point of engine 20 is to be set, it is possible to operate the engine 20 at an operating point at which a fuel efficiency is excellent.

In the case shown in FIG 7B, the Mode2 includes a mode in which the power driving of the first electric motor MG1 is performed with the electric power generated by the third electric motor MG3 that is operated as the electric generator, whereby the engine 20 is driven and rotated. In this Mode2, the electric power consumed by the power driving of the first electric motor MG1 is covered by the regenerative power of the third electric motor MG3, which is generated by a kinetic energy of the vehicle 8, and the engine rotational speed Ne is increased by the power driving of the first electric motor MG1. The engine 20 is in a fuel cut state, and the engine rotational speed Ne is increased by the first electric motor torque Tmg1, and the torque converted onto the axis of the first rotary element RE1 is considered to be a negative torque. Even where the engine 20 is operated with the fuel being injected thereto, if the engine rotational speed Ne is increased by the first electric motor torque Tmg1 to a higher speed vale than when the engine 20 is in an independent operating state, the torque converted onto the axis of the first rotary element RE1 is considered to be a negative torque. The positive direction of the torque is the direction of the torque in a case in which the engine 20 is operated. The case in which the engine 20 is operated is synonymous with a case in which the positive torque is generated by the engine 20 as such. In the Mode2 shown in FIG 7B, the power conversion is made between the kinetic energy of the vehicle 8 and the third electric motor MG3, and between the third electric motor MG3 and the first electric motor MG1. In this way, the engine brake can be applied in the Mode2. Where the engine brake is applied in the Mode2, too, the explosive vibration torque of the engine 20 is not transmitted to the front drive shafts 38, which is advantageous for suppressing the NV.

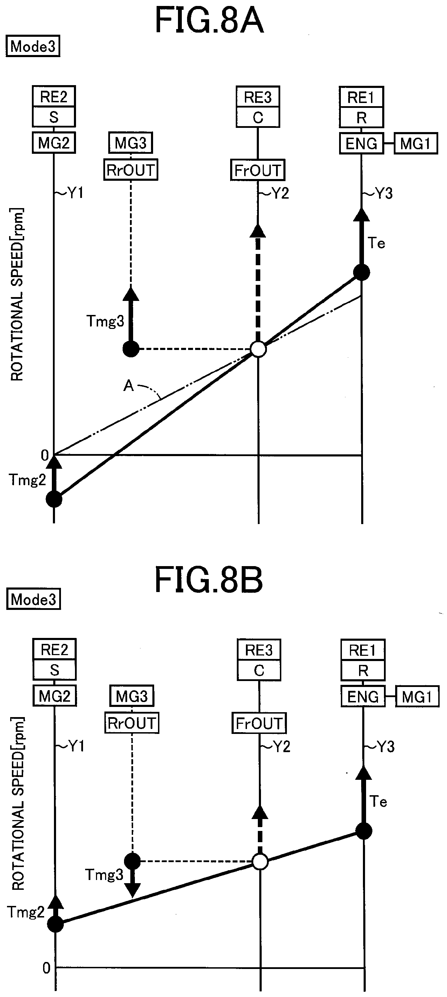

FIGS. 8A and 8B are collinear diagrams for explaining second HEV mode, i.e., Mode3 in which the engine 20 is operated whereby the electric power is transferred between the second and third electric motors MG2, MG3, wherein FIG 8A shows a case in which the third electric motor MG3 is caused to generate the torque by the electric power generated by the second electric motor MG2, and FIG 8B shows a case in which the second electric motor MG2 is caused to generate the torque by the electric power generated by the third electric motor MG3. The Mode3 is one of the plurality of modes into which the drive mode of the vehicle 8 can be placed. The Mode3 is a mode enabling the hybrid driving, i.e., HEV driving, and is an input split mode enabling an input split driving with the engine 20 as the power source. In the Mode3, the differential mechanism 32 is in the differential state, and a reaction force of the engine torque Te is taken by the second electric motor MG2, so that the torque is mechanically transmitted to the third rotary element RE3. The Mode3 is a mode that can realize the electric-continuously-variable transmission function that performs an input split mode operation in which the power inputted by the engine 20 is outputted to the front and rear wheels 12f, 12r with the brake BR being placed in the released state. In the Mode3, the engine brake can be applied. It is noted that the input split mode is a mode in which two electric motors (MG2, MG3) and an engine are connected to three rotary elements of a differential mechanism, and an electric motor (MG3) is placed on the output element (RE3), when expressed using a collinear diagram.

In FIG 8A, double-dashed line A in FIG 8A shows a state in which a mechanical point is created in the differential mechanism 32 in which no electrical work is made by setting the rotational speed of the second rotary element RE2 (second electric motor speed Nmg2) to zero so as to set the power of the second electric motor MG2 to zero. In the differential mechanism 32, the rotational speed of the third rotary element RE3 as the output element is set to a deceleration side, i.e., underdrive (U/D) side, relative to the engine rotational speed Ne at this mechanical point. That is, the mechanical point of the differential mechanism 32 is set by a reduction ratio. In FIGS. 8A and 8B, the Mode3 is the U/Dinput split mode.

In FIG 8A, the Mode3 includes at least a mode in which the engine 20 is operated whereby the second electric motor MG2 is operated as the electric generator, while the third electric motor MG3 is operated as the prime mover by the electric power generated by the second electric motor MG2. In the Mode3, the torque is mechanically transmitted to the third rotary element RE3, and the electric power generated by the second electric motor MG2 is supplied to the third electric motor MG3 whereby the torque is generated in the third electric motor MG3. In the Mode3, the power conversion is made between the engine 20 and the second electric motor MG2, and between the second electric motor MG2 and the third electric motor MG3. The Mode3 provides a high transmission efficiency in the low running speed and high load range, so that it is useful in the low running speed and high load range, for example.

In FIG 8B, the Mode3 may include a mode in which the engine 20 is operated while the second electric motor MG2 is operated as the prime mover using the electric power generated by the third electric motor MG3. In this Mode3, when the torque is mechanically transmitted to the third rotary element RE3, the second electric motor MG2 is rotated in the forward direction, so that the electric power consumed by the power driving of the second electric motor MG2 is covered by the regenerative power of the third electric motor MG3 using the kinetic energy of the vehicle 8. In the Mode3 shown in FIG 8B, the power conversion is made between the kinetic energy of the vehicle 8 and the third electric motor MG3, and between the third electric motor MG3 and the second electric motor MG2.

The vehicle drive apparatus 10 is controlled to perform the Mode3 shown in FIG 8A during a normal driving in which the drive mode is selected with an energy efficiency being prioritized. On the other hand, the vehicle drive apparatus 10 is controlled to perform the Mode3 shown in FIG 8B, when the drive mode is selected with a power performance being prioritized, without the Mode3 shown in FIG 8A being is not executed.

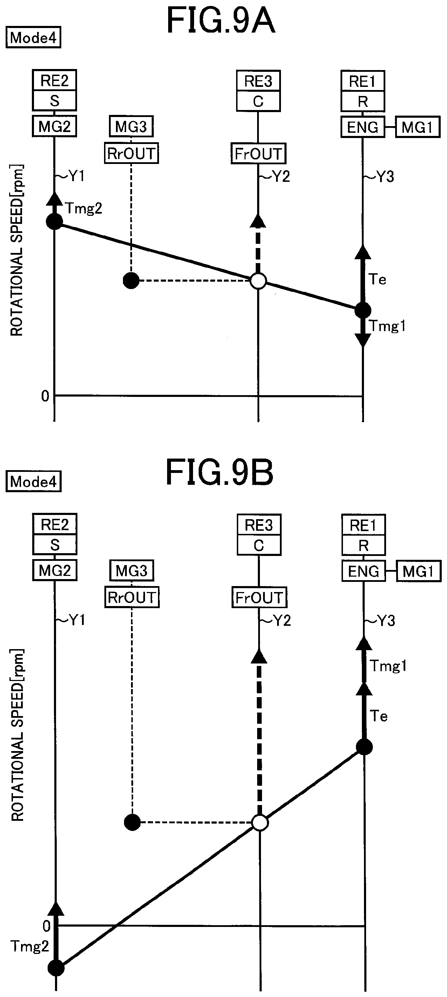

FIGS. 9A and 9B are collinear diagrams for explaining thid HEV mode, i.e., Mode4 in which the engine 20 is operated whereby the electric power is transferred between the first and second electric motors MG1, MG2, wherein FIG 9A shows a case in which the second electric motor MG2 is caused to generate the torque by the electric power generated by the first electric motor MG1, and FIG 9B shows a case in which the first electric motor MG1 is caused to generate the torque by the electric power generated by the second electric motor MG2. The Mode4 is one of the plurality of modes into which the drive mode of the vehicle 8 can be placed. The Mode4 is a mode enabling the hybrid driving, i.e., HEV driving, and is an output split mode enabling an output split driving with the engine 20 as the power source. In the Mode4, the differential mechanism 32 is in the differential state, and a reaction force of the engine torque Te is taken by the second electric motor MG2, so that the torque is mechanically transmitted to the third rotary element RE3. The Mode4 is a mode that can realize the electric-continuously-variable transmission function that performs an output split mode operation in which the power inputted by the engine 20 is outputted to the front wheels 12f with the brake BR being placed in the released state. In the Mode3, the engine brake can be applied. Since the mechanical point of the differential mechanism 32 is set by a reduction ratio, the Mode4 shown in FIGS. 9A and 9B is U/Doutput split mode. It is noted that the output split mode is a mode in which two electric motors (MG1, MG2) and an engine are connected to three rotary elements of a differential mechanism, and an electric motor (MG1) is placed on the input element (RE1) to which the engine is connected, when expressed using a collinear diagram.

In FIG 9A, the Mode4 includes at least a mode in which the engine 20 is operated whereby the first electric motor MG1 is operated as the electric generator, while the second electric motor MG2 is operated as the prime mover by the electric power generated by the first electric motor MG1. In Mode4, when the torque is mechanically transmitted to the third rotary element RE3, the second electric motor MG2 is rotated in the forward direction, so that the electric power consumed by the power driving of the second electric motor MG2 is covered by the electric power generated by the first electric motor MG1 using the power of the engine 20. In the Mode4, the power conversion is made between the engine 20 and the first electric motor MG1, and between the first electric motor MG1 and the second electric motor MG2. The Mode4 provides a high transmission efficiency in the high running speed range, so that it is useful in the high running speed range, for example.

In FIG 9B, the Mode4 may include a mode in which the engine 20 is operated while the first electric motor MG1 is operated as the prime mover using the electric power generated by the second electric motor MG2. In this Mode4, when the torque is mechanically transmitted to the third rotary element RE3, the second electric motor MG2 is rotated in the reverse direction, so that the electric power generated by the second electric motor MG2 is supplied to the first electric motor MG1 whereby the torque is generated in the first electric motor MG1. In the Mode4 shown in FIG 9B, the power conversion is made between the engine 20 and the second electric motor MG2, and between the second electric motor MG2 and the first electric motor MG1.

The vehicle drive apparatus 10 is controlled to perform the Mode4 shown in FIG 9A during the normal driving in which the drive mode is selected with the energy efficiency being prioritized. On the other hand, the vehicle drive apparatus 10 is controlled to perform the Mode4 shown in FIG 9B, when the drive mode is selected with a power performance being prioritized, without the Mode4 shown in FIG 9A being is not executed.

The electronic control apparatus 70 is configured to switch the drive mode of the vehicle 8, based on the running speed V and a driving load. The driving load is represented by the accelerator opening degree $\theta$acc, or represented by an actual value of a drive power Fr or a required value of the drive power Fr based on the accelerator opening degree $\theta$acc and the running speed V, for example. In the low running speed and low load range, the first HEV mode, i.e., the Mode2 (see FIGS. 7A and 7B) is established as the drive mode. In the low running speed and high load range, the second HEV mode, i.e., the Mode3 (see FIGS. 8A and 8B) is established as the drive mode. In the high running speed range, the third HEV mode, i.e., the Mode4 (see FIGS. 9A and 9B) is established as the drive mode.

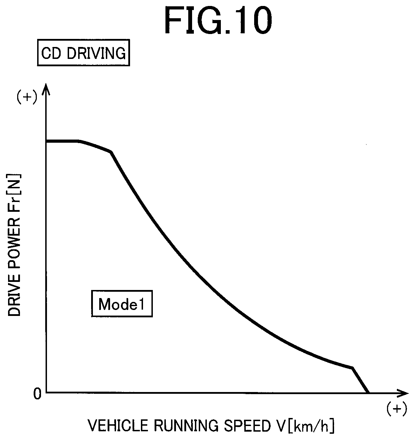

FIGS. 10-13 are views showing examples of a drive-mode switching map used for a control for switching the drive mode of the vehicle 8. The drive-mode switching map represents a predetermined relationship on a two-dimensional coordinate system with its horizontal axis indicative of the running speed V and with its vertical axis indicative of the driving load, wherein boundaries define areas that correspond to the respective modes. In other words, the drive-mode switching maps represent the predetermined relationship for determining which one of the modes the drive mode of the vehicle 8 is to be placed in.

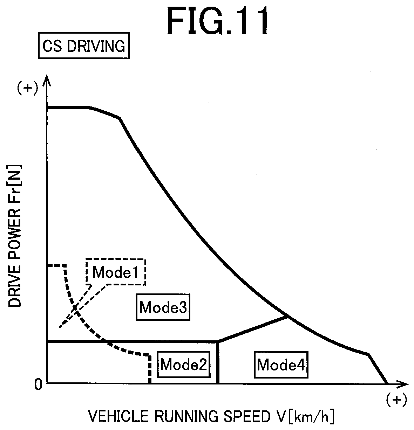

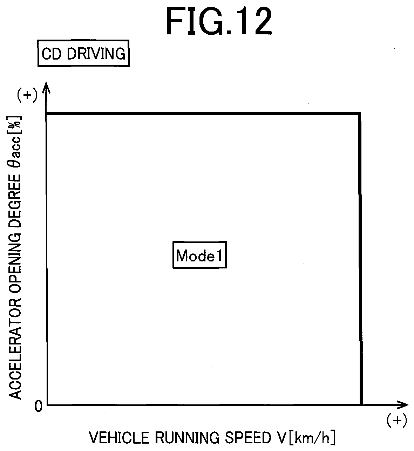

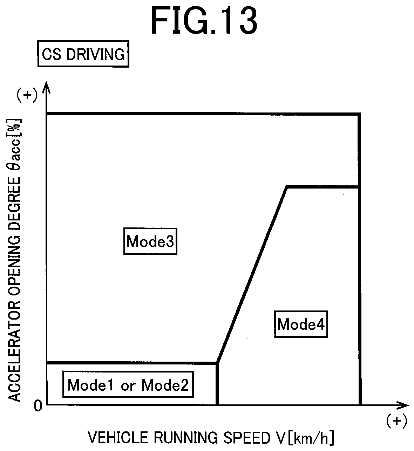

Each of FIGS. 10 and 11 shows a case in which the driving load is set to the drive power Fr, and each of FIGS. 12 and 13 shows a case in which the driving load is set to the accelerator opening degree $\theta$acc. FIG 12 shows the case in which the drive power Fr in FIG 10 is replaced with the accelerator opening degree θacc, and FIG 13 shows the case in which the drive power Fr in FIG 11 is replaced with the accelerator opening degree θacc. Each of FIGS. 10 and 12 shows the drive-mode switching map used in CD (charge depleting) driving in which the driving of the vehicle 8 is performed while the charged amount SOC is consumed. Each of FIGS. 11 and 13 shows the drive-mode switching map used in the CS (charge sustain) driving in which the driving of the vehicle 8 is performed while the charged amount SOC is maintained.

The drive-mode switching map shown in each of FIG 10 and FIG 12 is used, for example, in the PHEV (plug-in hybrid electric vehicle) equipped with the battery 64 having a relatively large capacity, when CD mode for CD driving, i.e., a charged-power consuming driving, is set. The drive-mode switching map shown in each of FIG 10 and FIG 12 may not be used in the HEV (hybrid electric vehicle) equipped with the battery 64 having a capacity smaller than that of the PHEV. The drive-mode switching map shown in each of FIG 11 and FIG 13 is used, for example, in the PHEV, when CS mode for CS driving, i.e., charged-power maintaining driving, is set. Alternatively, the drive-mode switching map shown in each of FIG 11 and FIG 13 is used, for example, in the HEV

When the CD mode is set and the charged amount SOC is sufficiently large, the drive-mode switching map shown in FIG 10 or FIG 12 is selected, so that the Mode1 is set in an entire range. When the CD mode is set but the charged amount SOC is small, or when the CS mode is set, the drive-mode switching map shown in FIG 11 or FIG 13 is selected. In the drive-mode switching map shown in FIG 11 or FIG 13, the Mode2 is set in the low running speed and low load range in which the muffled sound is likely to be problematic, the Mode3, which provides high transmission efficiency in the high load range, is set in the high driving load range, and the Mode4, which provides excellent transmission efficiency in an overdrive gear ratio that is often used at a high running speed of the vehicle 8, is set to the high running speed range. Even when the charged amount SOC is small and a range available with the charged amount SOC is small, the Mode1 may be set in a range in which the power outputted from the battery 64 is small, as long as consumption of the charged amount SOC is allowed. Further, when an operating efficiency of the engine 20 is poor, the Mode1 may be set. The Mode1 is set in the low running speed and low load range, depending on the charged amount SOC.

In the drive-mode switching map shown in FIG 11 or FIG 13, it can be seen that the Mode3 is set as the drive mode in the low running speed and high load range, and that the Mode4 is set as the drive mode in the high running speed range. Or, from another point view, it can be seen that Mode3 is set as the drive mode in the high load range, and that Mode4 is set as the drive mode in the high running speed and low load range.

By the way, in a running-stage engine start, i.e., in the start of the engine 20 during running of the vehicle 8, the rotational speed of the second electric motor MG2 is changed as the engine rotational speed Ne is increased, since the second electric motor MG2 is connected to the engine 20 through the differential mechanism 32. The change of the rotational speed of the second electric motor MG2 causes an inertial torque $I2 \times d\omega2/dt$ which is transmitted to a crankshaft of the engine 20, and which acts as a load against start of the engine 20, thereby causing a rick of reduction of startability of the engine 20.

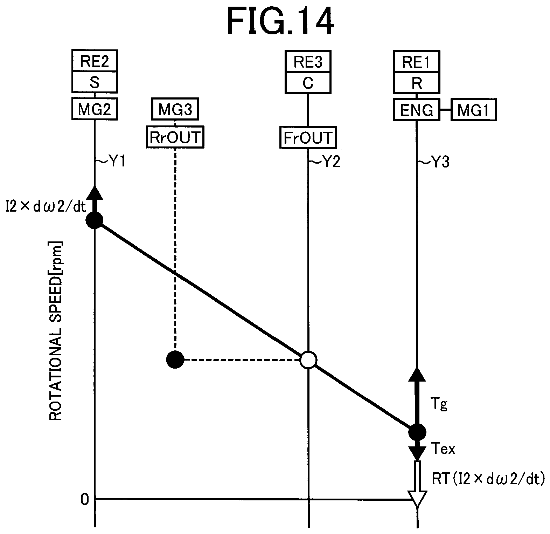

FIG 14 is a collinear diagram for explaining operations of the respective rotary elements in a control for the running-stage engine start, particularly, in a comparative example in which the inertial torque $I2 \times d\omega2/dt$ is transmitted to the crankshaft of the engine 20, so as to act as the load against the start of the engine 8, In the following description, parts common to the collinear diagram in each of FIGS. 4-9 described above will be given the same reference numerals and their explanations will be omitted. Also, each torque mechanically transmitted from the inertial torque $I2 \times d\omega2/dt$ will be indicated by a white arrow.

In the running-stage engine start, the crankshaft of the engine 20 is rotated by an engine starting torque Tg of the first electric motor MG1 (hereinafter referred to as "motoring"), and when the engine rotational speed Ne rises to a predetermined startable rotational speed Ne1, for example, 600 [rpm], fuel injection and ignition are performed in this order. FIG 14 shows a state in which the motoring is performed executed in the running-stage engine start. A motoring angular acceleration dωe/dt, which indicates the startability in the motoring, is given by the following equation (1), and the engine starting torque Tg outputted by the first electric motor MG1 is set such that the motoring angular acceleration dωe/dt becomes a predetermined value that enables the motoring to be performed without any problem.

$$d\omega e/dt = (Tg\text{-}Tex)/(Ie\text{+}I1) \ldots\ldots (1),$$

where "Tex" represents a resistive torque of the engine 20 acting against rotation of the motoring, "Ie" represents an inertial moment of the engine 20, and "I1" is an inertial moment of the first electric motor MG1 acting against the ring gear R. Each of these values is determined in advance by design or experiment.

In FIG 14, as the engine rotational speed Ne increased by the motoring, a rotational speed change dω2/dt occurs in the sun gear S. As a result, an inertial torque $I2 \times d\omega2/dt$ that acts against the rotational speed change dω2/dt occurs in the sun gear S. "I2" represents an inertial moment of the second electric motor MG2 to the sun gear S, and is a value determined in advance by design or experiment. An inertial moment of the carrier C (first drive shaft FrOUT), which is connected to the ground through the vehicle body, is larger than the inertial moment (= I2) of the sun gear S and the inertial moment (=Ie+I1) of the ring gear R, so that it becomes a reaction force element of the generated inertial torque $I2 \times d\omega2/dt$. Therefore, the inertial torque $I2 \times d\omega2/dt$ is transmitted to the ring gear R, generating a reaction torque $RT(I2 \times d\omega2/dt)$ (see white arrow in FIG 14). When the reaction torque $RT(I2 \times d\omega2/dt)$ occurs, the motoring angular acceleration $d\omega e/dt$ is given by the following equation (2).

$$d\omega e/dt = (Tg-Tex-RT(I2 \times d\omega2/dt))/(Ie+I1) \ldots\ldots (2)$$

Compared to the previous equation (1), the torque acting on the crankshaft of engine 20 is reduced by the reaction torque $RT(I2 \times d\omega2/dt)$, so that the motoring angular acceleration $d\omega e/dt$ is smaller. As a result, a timing at which the engine rotational speed Ne reaches an ignition-enabling speed is delayed, so that startability of the engine 20 is reduced.

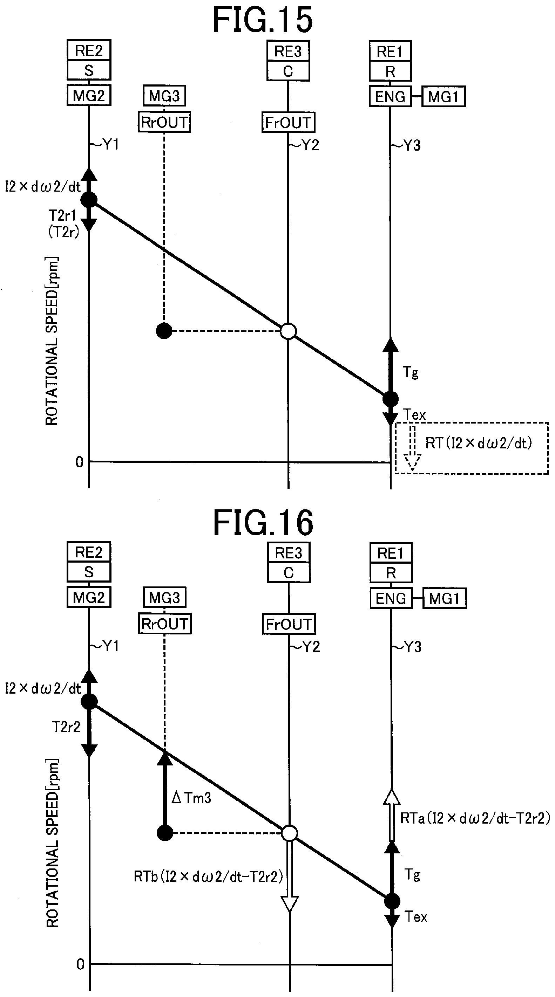

FIG 15 is a collinear diagram for explaining the operation of each rotary element where the second electric motor MG2 is caused to generate a inertia resisting torque acting against the inertial torque $I2 \times d\omega2/dt$ in control of the running-stage engine start executed by the electronic control apparatus 70.

In the running-stage engine start in FIG 15, the electronic control apparatus 70 performs the motoring by the engine starting torque Tg of the first electric motor MG1, and at the same time causes the second electric motor MG2 to generate an inertia resisting torque T2r that acts against the inertial torque $I2 \times d\omega2/dt$ generated in the sun gear S. Owing to generation of the inertia resisting torque T2r, the reaction torque $RT(I2 \times d\omega2/dt)$ transmitted to the ring gear R is reduced whereby the reduction of the motoring angular acceleration $d\omega e/dt$ and the reduction of the startability of the engine 20 are suppressed. The inertia resisting torque T2r, which is generated by the second electric motor MG2 when the running-stage engine start is performed, is controlled to act on the second rotary element RE2 in a rotation direction that is opposite to a rotation direction of the engine 20 connected to the first rotary element RE1.

Further, where the inertia resisting torque T2r is set to an inertia offsetting torque T2r1 that offsets the inertial torque $I2 \times d\omega2/dt$, namely, where the inertia resisting torque T2r is set to T2r1 $(= -I2 \times d\omega2/dt)$, the reaction torque $RT(I2 \times d\omega2/dt)$ will not be generated in the ring gear R (see an area enclosed by dashed line in FIG 15). As a result, the motoring angular acceleration $d\omega e/dt$ is given by the above equation (1), and the engine starting torque Tg of the first electric motor MG1 is not reduced, so that the engine rotational speed Ne is increased at the desired motoring angular acceleration $d\omega e/dt$, whereby the ignition-enabling speed can be reached at a desired timing.

FIG 16 is a collinear diagram for explaining the operation of each rotary element where the second electric motor MG2 is caused to generate an engine-start accelerating torque that is larger than the inertial torque $I2 \times d\omega2/dt$ in control of the running-stage engine start executed by the electronic control apparatus 70.

In the running-stage engine start in FIG 16, the electronic control apparatus 70 performs the motoring by the engine starting torque Tg of the first electric motor MG1, and at the same time causes the second electric motor MG2 to generate, as the inertia resisting torque T2r, an engine-start accelerating torque T2r2 which is larger than the inertial torque $I2 \times d\omega2/dt$ and which acts in the direction that resists the inertial torque $I2 \times d\omega2/dt$. As a result, a difference torque $(=I2 \times d\omega2/dt-T2r2)$, which is a difference between the inertial torque $I2 \times d\omega2/dt$ and the engine-start accelerating torque T2r2, is generated in the sun gear S. Owing to the difference torque $(= I2 \times d\omega2/dt-T2r2)$, the reaction torque RTa $(I2 \times d\omega2/dt-T2r2)$ is generated in the ring gear R (first rotary element), and a fluctuated torque RTb $(I2 \times d\omega2/dt-T2r2)$ is generated in the carrier C (third rotary element) (see the white arrow in FIG 16). Owing to generation of the reaction torque RTa $(I2 \times d\omega2/dt-T2r2)$, the motoring angular acceleration $d\omega e/dt$ is given by the following equation (3).

$$d\omega e/dt = (Tg-Tex+RTa(I2 \times d\omega2/dt-T2r2))/(Ie+I1) \ldots\ldots (3)$$

Compared to the previous equation (1), the torque acting on the crankshaft of engine 20 is increased by the reaction torque RTa $(I2 \times d\omega2/dt-T2r2)$, so that the motoring angular acceleration $d\omega e/dt$ is larger. As a result, the timing at which the engine rotational speed Ne reaches the ignition-enabling speed is advanced, so that the startability of engine 20 is increased. The control of the running-stage engine start shown in FIG 16 is executed when the start of engine 20 needs to be advanced or when the engine starting torque Tg of the first electric motor MG1 is insufficient.

Further, since the generation of the fluctuated torque RTb $(I2 \times d\omega2/dt-T2r2)$ causes deceleration and acceleration of the vehicle 8, the electronic control apparatus 70 causes the third electric motor MG3 to generate a vehicle-acceleration offsetting torque $\triangle Tm3$ that offsets the fluctuated torque RTb $(I2 \times d\omega2/dt-T2r2)$, wherein the vehicle-acceleration offsetting torque $\triangle Tm3 = -RTb$ $(I2 \times d\omega2/dt-T2r2)$. The generation of the vehicle-acceleration offsetting torque $\triangle Tm3$ prevents the engine-start accelerating torque T2r2 from causing deceleration and acceleration of the vehicle 8. The vehicle-acceleration offsetting torque $\triangle Tm3$ corresponds to "offsetting torque (that offsets the fluctuated torque generated in the first drive shaft)" recited in the appended claims.

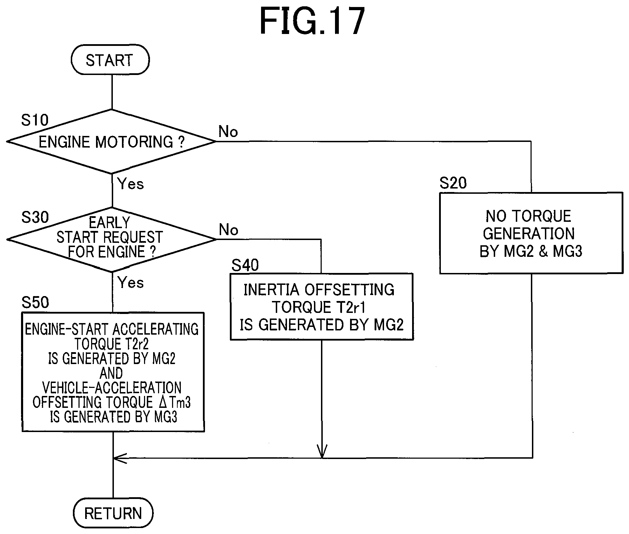

FIG 17 is a flow chart showing main parts of control operation of the electronic control apparatus 70, namely, a control routine executed by the electronic control apparatus 70 in the control for starting the engine 20 during running of the vehicle 8. This control routine is repeatedly executed during running of the vehicle 8.

The control routine is initiated with step S10 that is implemented to determine whether the motoring is being performed for the engine 20 or not, namely, whether the crankshaft of the engine 20 is being rotated by the engine starting torque Tg of the first electric motor MG1. When a negative determination is made at step S10, the control flow goes to step S20 at which one cycle of execution of the control routine is terminated without generation of the torque by the second and third electric motors MG2, MG3, which is described above with reference to FIG 15 or FIG 16.

When an affirmative determination is made at step S10, step S30 is implemented to determine whether or not there is an early start request for the engine 20. When a negative determination is made at step S30, the control flow goes to step S40 at which the inertia offsetting torque T2r1 is generated by the second electric motor MG2 (see FIG 15) and then one cycle of execution of the control routine is terminated.

When an affirmative determination is made at step S30, the control flow goes to step S50 at which the engine-start accelerating torque T2r2 is generated by the second electric motor MG2 while the vehicle-acceleration offsetting torque △Tm3 is generated by the third electric motor MG3 (see FIG 16), and then one cycle of execution of the control routine is terminated.

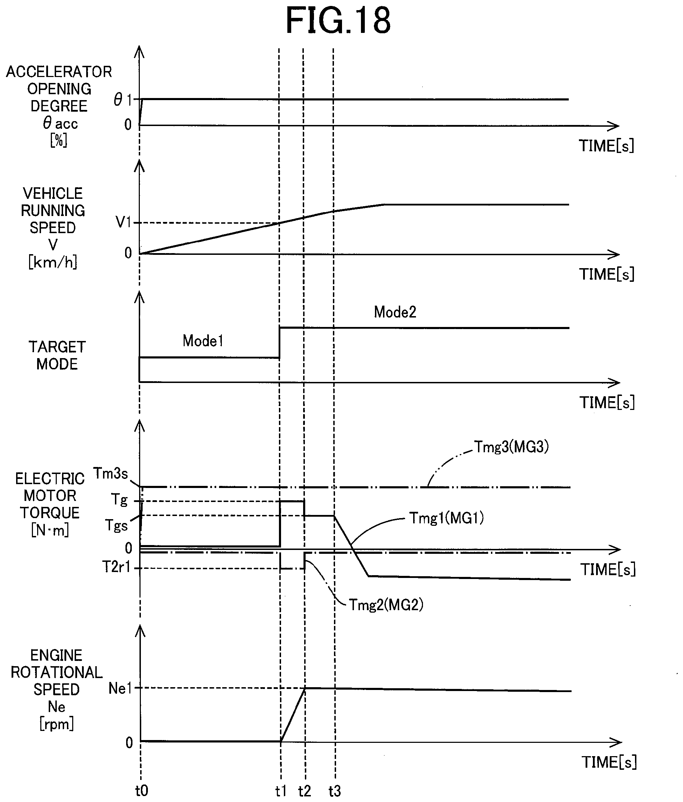

FIG 18 is a time chart for explaining the control operation in a case in which the inertia offsetting torque T2r1 is generated as shown in FIG 15 with implementation of step S40 shown in FIG 17, in the running-stage engine start when the drive mode of the vehicle 8 has been switched from the Mode1_MG3 to the Mode2.

First, at time point t0, the accelerator is turned ON (accelerator opening degree θacc is changed to θ1), and the third electric motor MG3 outputs a driving torque Tm3s, whereby the running of the vehicle 8 is started with the drive mode being the Mode1_MG3. Next, at time point t1, the running speed V reaches a target running speed V1 for switching the drive mode to the Mode2 so that the motoring is started for the engine 20 for switching the drive mode to the Mode2. The first electric motor MG1 is caused to generate the engine starting torque Tg for the motoring, and the second electric motor MG2 is caused to generate the inertia offsetting torque T2r1 that offsets the inertial torque I2×dω2/dt generated in the sun gear S. Next, at time point t2, the engine rotational speed Ne reaches the startable rotational speed Ne1, the fuel injection and ignition are performed, and the generation of the inertia offsetting torque T2r1 by the second electric motor MG2 is stopped. Further, the engine starting torque Tg generated by the first electric motor MG1 is reduced to a value Tgs, and torque support is provided until the engine rotational speed Ne is stabilized. Then, at time point t3 at which the ignition of the engine 20 has been completed and the engine rotational speed Ne has been stabilized, the drive mode is switched to the Mode2.

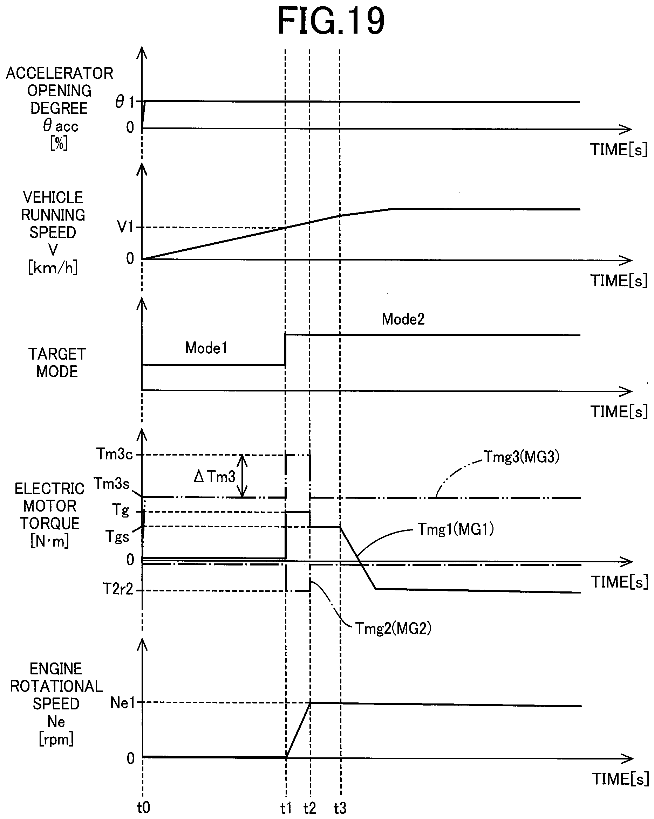

FIG 19 is a time chart for explaining the control operation in a case in which the engine-start accelerating torque T2r2 (in place of the inertia offsetting torque T2r1 shown in FIG 18) is generated as shown in FIG 16 with implementation of step S50 shown in FIG 17.

First, at time point t0, the running of the vehicle 8 is started with the drive mode being the Mode1_MG3, as in the case shown in FIG 18. Next, at time point t1, the running speed V reaches the target running speed V1 for switching the drive mode to the Mode2 so that the motoring is started for the engine 20 for switching the drive mode to the Mode2. The first electric motor MG1 is caused to generate the engine starting torque Tg for the motoring, and the second electric motor MG2 is caused to generate the engine-start accelerating torque T2r2 that is larger than the inertia offsetting torque T2r1 offsetting the inertial torque I2×dω2/dt generated in the sun gear S. Further, at the same time, the third electric motor MG3 is caused to generate the vehicle-acceleration offsetting torque △Tm3 that offsets the fluctuated torque RTb (I2×dω2/dt-T2r2) generated due to generation of the engine-start accelerating torque T2r2. In FIG 19, generation of a torque Tm3c is shown, wherein the torque Tm3c corresponds to the driving torque Tm3s plus the vehicle-acceleration offsetting torque △Tm3. Next, at time point t2, the engine rotational speed Ne reaches the startable rotational speed Ne1, the fuel injection and ignition are performed, and the generation of the inertia offsetting torque T2r1 by the second electric motor MG2 and the generation of the vehicle-acceleration offsetting torque △Tm3 by the third electric motor MG3 are stopped. Further, the engine starting torque Tg generated by the first electric motor MG1 is reduced to the value Tgs, and the torque support is provided until the engine rotational speed Ne is stabilized. Then, at time point t3 at which the ignition of the engine 20 has been completed and the engine rotational speed Ne has been stabilized, the drive mode is switched to the Mode2.

As described above, in the present embodiment, the differential mechanism 32 includes the three rotary elements consisting of the first through third rotary elements RE1-RE3. The engine 20 and the first electric motor MG1 are connected to the first rotary element RE1 (ring gear R). The second electric motor MG2 is connected to the second rotary element RE2 (sun gear S), and the front drive shafts 38 are connected to the third rotary element RE3 (carrier C). The third electric motor MG3 is connected to the rear drive shafts 58. When the vehicle 8 is caused to run with the engine 20 being operated, the first electric motor MG1, which is connected to the same rotary element as the engine 20, is operated as the electric generator, and the third electric motor MG3 is operated as the prime mover by the electric power generated by the first electric motor MG1, whereby the rear drive shafts 58 are driven, so as to perform a so-called series driving. In the series driving, torque vibration of the engine 20 can be prevented from being transmitted to the front drive shafts 38, so that a body of the vehicle 8 is less likely to be vibrated when the vehicle 8 is caused to run with the engine 20 being operated. In the vehicle drive apparatus 10 according to the present embodiment, when performing the running-stage engine start for starting the engine 20 during running of the vehicle 8, the processor of the electronic control apparatus 70 is configured to cause the first electric motor MG1 to generate the engine starting torque Tg and to cause the second electric motor MG2 to generate the inertia resisting torque T2r that acts in the direction resisting the inertial torque I2×dω2/dt generated in the second rotary element RE2 due to the change in the rotational speed of the second rotary element RE2. Thus, when the running-stage engine start is to be performed, the inertia resisting torque T2r is generated by the second electric motor MG2 in addition of the generation of the engine starting torque Tg by the first electric motor MG1, wherein the inertia resisting torque T2r acts in the direction resisting the inertial torque I2×dω2/dt. Therefore, the startability of the engine 20 can be prevented from being reduced due to the inertial torque I2×dω2/dt generated in the second rotary element RE2, and the engine 20 can be started appropriately during running of the vehicle 8.

In the present embodiment, when performing the running-stage engine start, the processor of the electronic control apparatus 70 is configured to cause the second electric motor MG2 to generate, as the inertia resisting torque T2r, the inertia offsetting torque T2r1 that offsets the inertial torque I2×dω2/dt. Thus, the engine starting torque Tg of the first electric motor MG1 can be used for the engine starting without reducing the engine starting torque Tg.

In the present embodiment, when performing the running-stage engine start, the processor of the electronic control apparatus 70 is configured to cause the second electric motor MG2 to generate, as the inertia resisting torque T2r, the engine-start accelerating torque T2r2 which is larger than the inertial torque I2×dω2/dt and which acts in the direction that resists the inertial torque I2×dω2/dt. Thus, the engine starting torque Tg is assisted by the engine-start accelerating torque T2r2 generated by the second electric motor MG2, whereby the startability of the engine 20 can be increased.

In the present embodiment, when performing the running-stage engine start, the processor of the electronic control apparatus 70 is configured to cause the third electric motor MG3 to generate the vehicle-acceleration offsetting torque △Tm3 that offsets the fluctuated torque RTb (I2×dω2/dt-T2r2) generated in the front drive shafts 38 due to generation of the engine-start accelerating torque T2r2. Thus, it is possible to suppress the acceleration of the vehicle 8 caused by the engine-start accelerating torque T2r2 generated by the second electric motor MG2.

SECOND EMBODIMENT

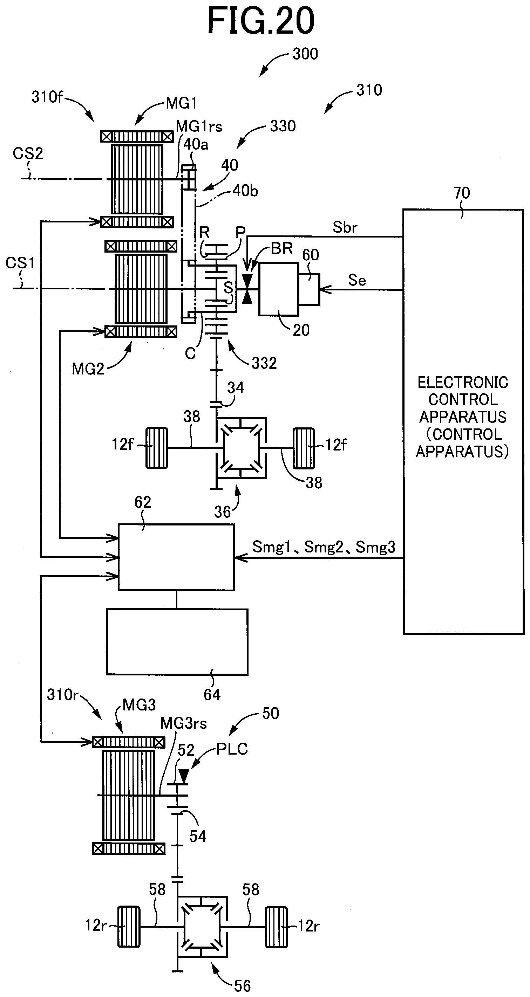

FIG 20 is a view schematically showing a construction of a vehicle 300 provided with a vehicle drive apparatus 310 (including a front drive portion 310f and a rear drive portion 310r) to which the present invention is applied. As shown in FIG 20, a front power transmission device 330 of the front drive portion 310f includes a differential mechanism 332. The differential mechanism 332 and the front differential gear device 36 are connected to each other through the front counter gear 34, as in the front power transmission device 30 in the above-described first embodiment.

The differential mechanism 332 is a single-pinion type planetary gear device having a sun gear S, pinion gears P, a carrier C and a ring gear R. The second electric motor MG2 is connected to the sun gear S. The engine 20 and the first electric motor MG1 are connected to the carrier C. The first electric motor MG1 is connected to the carrier C through the power transmission mechanism 40. The ring gear R meshes with the front counter gear 34. The front drive shafts 38 are connected to the ring gear R. The brake BR is connected at an end portion thereof to the output shaft of the engine 20 or the carrier C, and is connected at another end portion thereof to a non-rotatable member (not shown) such as a casing.

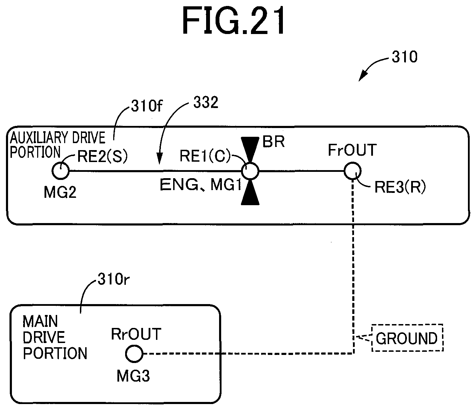

FIG 21 is a view showing a construction of the vehicle drive apparatus 310, by using a collinear diagram. The differential mechanism 332 of the front drive portion 310f includes three rotary elements consisting of the first rotary element RE1, the second rotary element RE2 and the third rotary element RE3. Each of the rotary elements RE1-RE3 of the differential mechanism 332 is connected to an actuator. Expressing using the collinear diagram, the first rotary element RE1 is the carrier C. The first rotary element RE1 is connected to the engine 20 and the first electric motor MG1. The second rotary element RE2 is the sun gear S. The second rotary element RE2 is connected to the second electric motor MG2. The third rotary element RE3 is the ring gear R. The third rotary element RE3 is connected to the front drive shafts 38, i.e., the front wheels 12f. The brake BR is a brake mechanism that is configured to stop rotation of the first rotary element RE1 by being placed in the engaged state. The rear drive portion 310r has substantially the same construction as the rear drive portion 10r in the above-described first embodiment, so that its description is not provided. The differential mechanism 332 is constructed such that the first, second and third rotary elements RE1, RE2, RE3 are to be rotated about a common axis in the form of the first axis CS1 about which the engine 20 is to be rotated, and such that the first rotary element RE1 is to be rotated at a rotational speed that is intermediate between the rotational speed of the second rotary element RE2 and the rotational speed of the third rotary element RE3 that is connected to the first drive shaft 38.

As in the vehicle drive apparatus 10 of the above-described first embodiment, in the vehicle drive apparatus 310, the drive mode can be switched among the plurality of modes, with the engine 20 and the first through third electric motors MG1, MG2, MG3 being controlled by the electronic control apparatus 70. Further, in the vehicle drive apparatus 310, the electronic control apparatus 70 controls the brake BG such that the brake BG is placed in the engaged state, as needed, upon switching of the drive mode.

In the differential mechanism 332, the rotational speed of the third rotary element RE3 as the output element is set to an acceleration side, i.e., overdrive (O/D) side, relative to the engine rotational speed Ne at the mechanical point. That is, the mechanical point of the differential mechanism 332 is set by an increase ratio. Therefore, in the vehicle drive apparatus 310, the Mode3 is the O/Dinput split mode, and the Mode4 is the O/Doutput split mode.

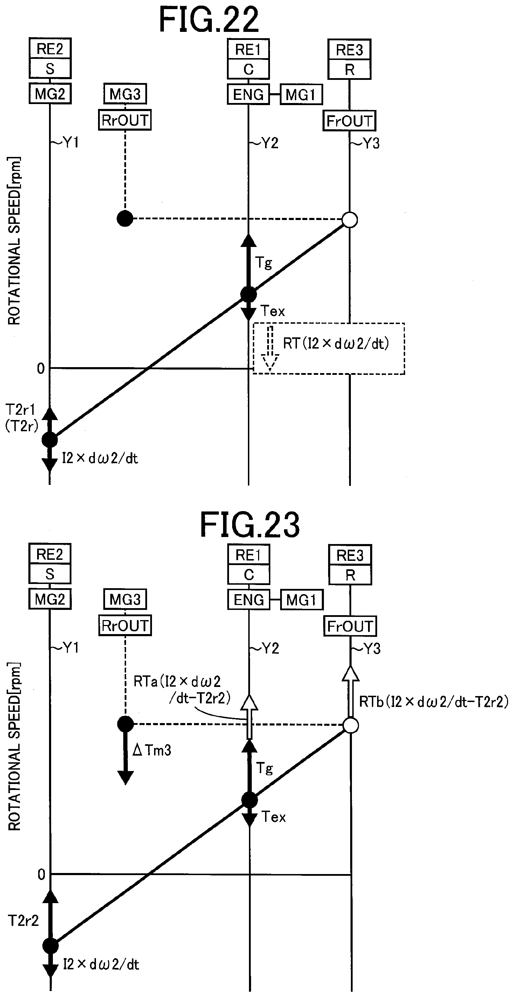

FIG 22 is a collinear diagram for explaining operations of the respective rotary elements in a case in which the second electric motor MG2 is caused to generate the resisting torque acting in a direction resisting the inertial torque $I2 \times d\omega2/dt$, in the control for the running-stage engine start, which is executed by the electronic control apparatus 70. FIG 23 is a collinear diagram for explaining operations of the respective rotary elements in a case in which the second electric motor MG2 is caused to generate the engine-start accelerating torque larger than the inertial torque $I2 \times d\omega2/dt$, in the control for the running-stage engine start, which is executed by the electronic control apparatus 70.

As shown in FIGS. 22 and 23, in the present second embodiment, the directions of the inertial torque $I2 \times d\omega2/dt$, inertia resisting torque T2r, inertia offsetting torque T2r1, engine-start accelerating torque T2r2, fluctuated torque RTb $(I2 \times d\omega2/dt-T2r2)$ and vehicle-acceleration offsetting torque $\triangle Tm3$ are reversed compared to those in FIGS. 15 and 16 of the above-described first embodiment. As shown in FIGS. 22 and 23, the inertia resisting torque T2r, which is generated by the second electric motor MG2 when the running-stage engine start is performed, is controlled to act on the second rotary element RE2 in a rotation direction that is the same as a rotation direction of the engine 20 connected to the first rotary element RE1. However, also in the present second embodiment, the inertia resisting torque T2r, inertia offsetting torque T2r1, engine-start accelerating torque T2r2, etc. are generated by the second electric motor MG2, and a torque loss upon start of the engine 20 is suppressed or a torque increase upon start of the engine 20 is intended. Further, preferably, where the engine-start accelerating torque T2r2 is generated, the vehicle-acceleration offsetting torque $\triangle Tm3$ is generated by the third electric motor MG3, so that acceleration of the vehicle 300 is suppressed.

The control routine shown in the flow chart shown in FIG 17 of the first embodiment can be executed in the same way also in the present second embodiment. Further, the time charts of FIG 18 and FIG 19 of the first embodiment show also the control operation in the present second embodiment, except the directions of the torques that are reversed in the present second embodiment.

As described above, in the present second embodiment, the same effects as those of the above-described first embodiment can be obtained.

THIRD EMBODIMENT

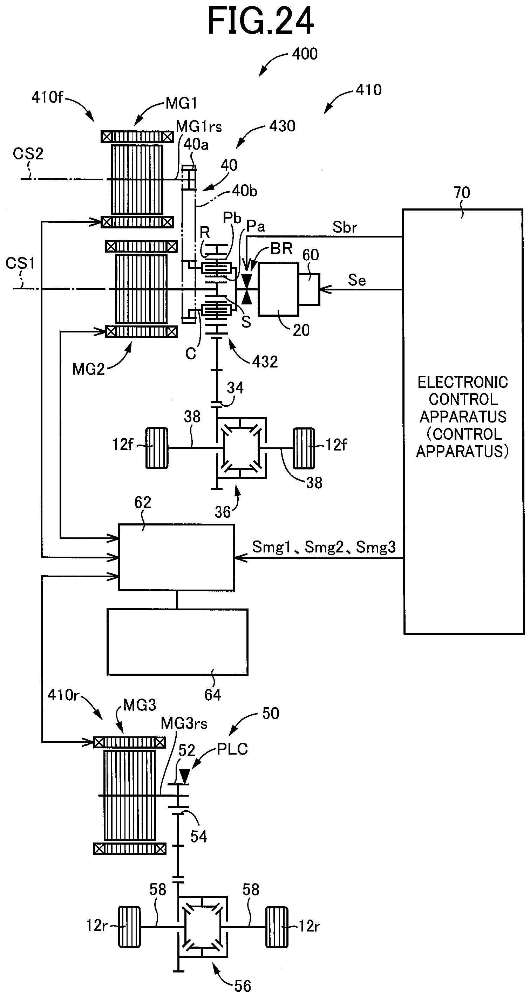

FIG 24 is a view schematically showing a construction of a vehicle 400 provided with a vehicle drive apparatus 410 (including a front drive portion 410f and a rear drive portion 410r) to which the present invention is applied. As shown in FIG 24, a front power transmission device 430 of the front drive portion 410f includes a differential mechanism 432. The differential mechanism 432 and the front differential gear device 36 are connected to each other through the front counter gear 34, as in the front power transmission device 30 in the above-described first embodiment.

The differential mechanism 432 is a double-pinion type planetary gear device having a sun gear S, pinion gears Pa, Pb, a carrier C and a ring gear R. The pinion gears Pa, Pb constitute a plurality of pairs of pinion gears, wherein each of the plurality of pairs of pinion gears consists of the pinion gears Pa, Pb meshing with each other. The second electric motor MG2 is connected to the sun gear S. The engine 20 and the first electric motor MG1 are connected to the carrier C. The first electric motor MG1 is connected to the carrier C through the power transmission mechanism 40. The ring gear R meshes with the front counter gear 34. The front drive shafts 38 are connected to the ring gear R. The brake BR is connected at an end portion thereof to the output shaft of the engine 20 or the carrier C, and is connected at another end portion thereof to a non-rotatable member (not shown) such as a casing.

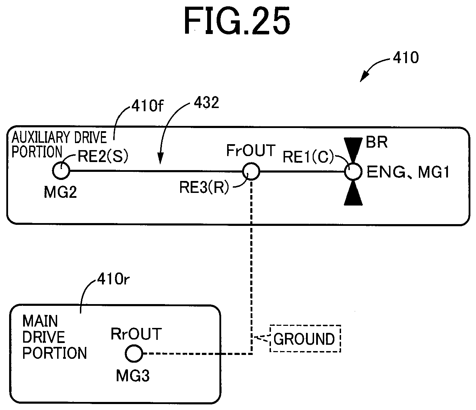

FIG 25 is a view showing a construction of the vehicle drive apparatus 410, by using a collinear diagram. The differential mechanism 432 of the front drive portion 410f includes three rotary elements consisting of the first rotary element RE1, the second rotary element RE2 and the third rotary element RE3. Each of the rotary elements RE1-RE3 of the differential mechanism 432 is connected to an actuator. Expressing using the collinear diagram, the first rotary element RE1 is the carrier C. The first rotary element RE1 is connected to the engine 20 and the first electric motor MG1. The second rotary element RE2 is the sun gear S. The second rotary element RE2 is connected to the second electric motor MG2. The third rotary element RE3 is the ring gear R. The third rotary element RE3 is connected to the front drive shafts 38, i.e., the front wheels 12f. The brake BR is a brake mechanism that is configured to stop rotation of the first rotary element RE1 by being placed in the engaged state. The rear drive portion 410r has substantially the same construction as the rear drive portion 10r in the above-described first embodiment, so that its description is not provided.

As in the vehicle drive apparatus 10 of the above-described first embodiment, in the vehicle drive apparatus 410, the drive mode can be switched among the plurality of modes, with the engine 20 and the first through third electric motors MG1, MG2, MG3 being controlled by the electronic control apparatus 70. Further, in the vehicle drive apparatus 410, the electronic control apparatus 70 controls the brake BG such that the brake BG is placed in the engaged state, as needed, upon switching of the drive mode.

In the differential mechanism 432, the rotational speed of the third rotary element RE3 as the output element is set to a deceleration side, i.e., underdrive (U/D) side, relative to the engine rotational speed Ne at the mechanical point. That is, the mechanical point of the differential mechanism 432 is set by a reduction ratio. Therefore, in the vehicle drive apparatus 410, the Mode3 is the U/Dinput split mode, and the Mode4 is the U/Doutput split mode.

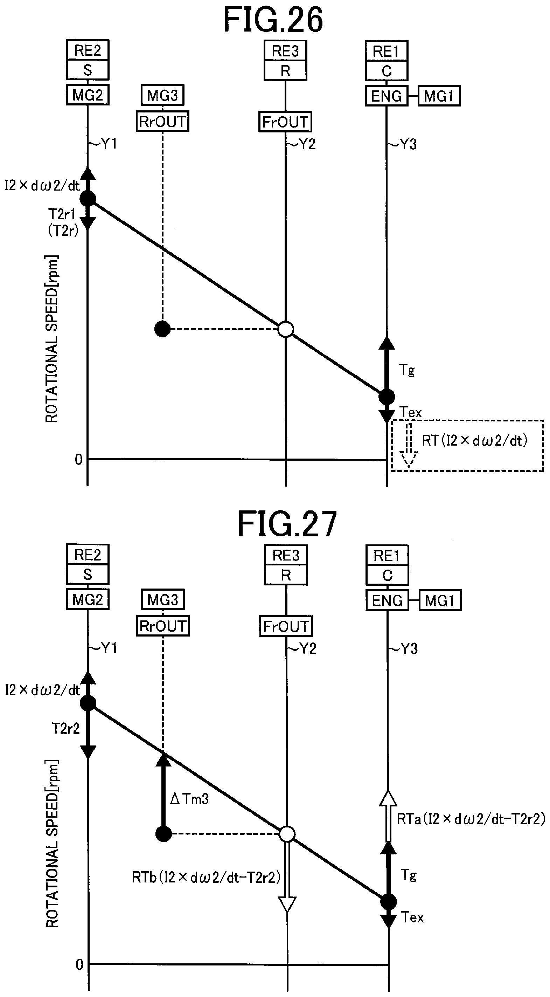

FIG 26 is a collinear diagram for explaining operations of the respective rotary elements in a case in which the second electric motor MG2 is caused to generate the resisting torque acting in a direction resisting the inertial torque $I2 \times d\omega 2/dt$, in the control for the running-stage engine start, which is executed by the electronic control apparatus 70. FIG 27 is a collinear diagram for explaining operations of the respective rotary elements in a case in which the second electric motor MG2 is caused to generate the engine-start accelerating torque larger than the inertial torque $I2 \times d\omega 2/dt$, in the control for the running-stage engine start, which is executed by the electronic control apparatus 70.

As shown in FIGS. 26 and 27, in the present third embodiment, the first rotary element RE1 is the carrier C instead of the ring gear R, and the third rotary element RE3 is the ring gear R instead of the carrier C, compared to the above-described first embodiment. However, also in the present third embodiment, the inertia resisting torque T2r, inertia offsetting torque T2r1, engine-start accelerating torque T2r2, etc. are generated by the second electric motor MG2, and a torque loss upon start of the engine 20 is suppressed or a torque increase upon start of the engine 20 is intended. Further, preferably, where the engine-start accelerating torque T2r2 is generated, the vehicle-acceleration offsetting torque △Tm3 is generated by the third electric motor MG3, so that acceleration of the vehicle 400 is suppressed. That is, also in the present third embodiment in which the first rotary element RE1 is the carrier C and the third rotary element RE3 is the ring gear R, substantially the same control operation as in the first embodiment is performed.

As described above, in the present third embodiment, the same effects as those of the above-described first embodiment can be obtained.

FOURTH EMBODIMENT

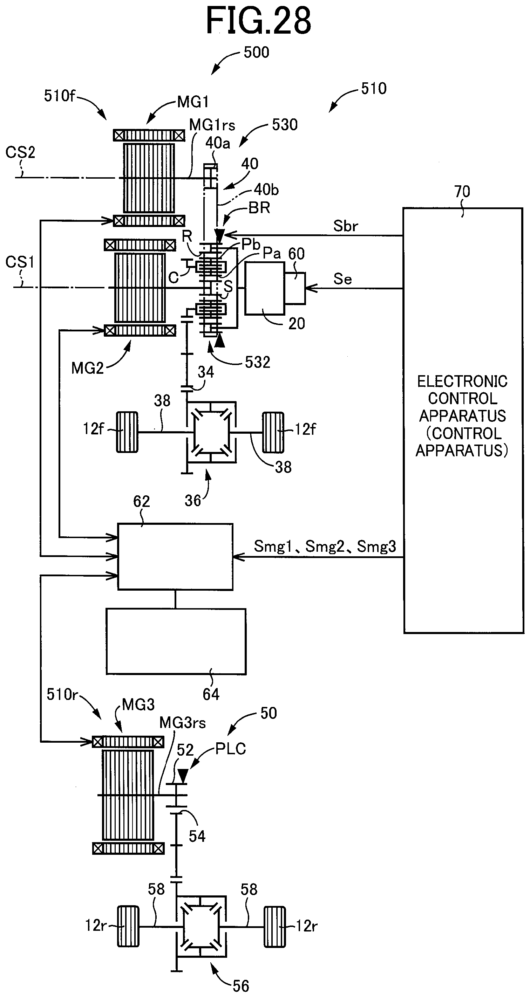

FIG 28 is a view schematically showing a construction of a vehicle 500 provided with a vehicle drive apparatus 510 (including a front drive portion 510f and a rear drive portion 510r) to which the present invention is applied. As shown in FIG 28, a front power transmission device 530 of the front drive portion 510f includes a differential mechanism 532. The differential mechanism 532 and the front differential gear device 36 are connected to each other through the front counter gear 34, as in the front power transmission device 30 in the above-described first embodiment.

The differential mechanism 532 is a double-pinion type planetary gear device having a sun gear S, pinion gears Pa, Pb, a carrier C and a ring gear R. The pinion gears Pa, Pb constitute a plurality of pairs of pinion gears, wherein each of the plurality of pairs of pinion gears consists of the pinion gears Pa, Pb meshing with each other. The second electric motor MG2 is connected to the sun gear S. The engine 20 and the first electric motor MG1 are connected to the ring gear R. The first electric motor MG1 is connected to the ring gear R through the power transmission mechanism 40. The carrier C meshes with the front counter gear 34. The front drive shafts 38 are connected to the carrier C. The brake BR is connected at an end portion thereof to the ring gear R, and is connected at another end portion thereof to a non-rotatable member (not shown) such as a casing.

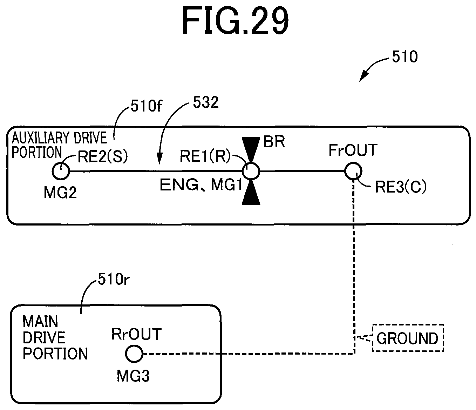

FIG 29 is a view showing a construction of the vehicle drive apparatus 510, by using a collinear diagram. The differential mechanism 532 of the front drive portion 510f includes three rotary elements consisting of the first rotary element RE1, the second rotary element RE2 and the third rotary element RE3. Each of the rotary elements RE1-RE3 of the differential mechanism 532 is connected to an actuator. Expressing using the collinear diagram, the first rotary element RE1 is the ring gear R. The first rotary element RE1 is connected to the engine 20 and the first electric motor MG1. The second rotary element RE2 is the sun gear S. The second rotary element RE2 is connected to the second electric motor MG2. The third rotary element RE3 is the carrier C. The third rotary element RE3 is connected to the front drive shafts 38, i.e., the front wheels 12f. The brake BR is a brake mechanism that is configured to stop rotation of the first rotary element RE1 by being placed in the engaged state. The rear drive portion 510r has substantially the same construction as the rear drive portion 10r in the above-described first embodiment, so that its description is not provided.

As in the vehicle drive apparatus 10 of the above-described first embodiment, in the vehicle drive apparatus 510, the drive mode can be switched among the plurality of modes, with the engine 20 and the first through third electric motors MG1, MG2, MG3 being controlled by the electronic control apparatus 70. Further, in the vehicle drive apparatus 510, the electronic control apparatus 70 controls the brake BG such that the brake BG is placed in the engaged state, as needed, upon switching of the drive mode.

In the differential mechanism 532, the rotational speed of the third rotary element RE3 as the output element is set to an acceleration side, i.e., overdrive (O/D) side, relative to the engine rotational speed Ne at the mechanical point. That is, the mechanical point of the differential mechanism 532 is set by an increase ratio. Therefore, in the vehicle drive apparatus 510, the Mode3 is the O/Dinput split mode, and the Mode4 is the O/Doutput split mode.

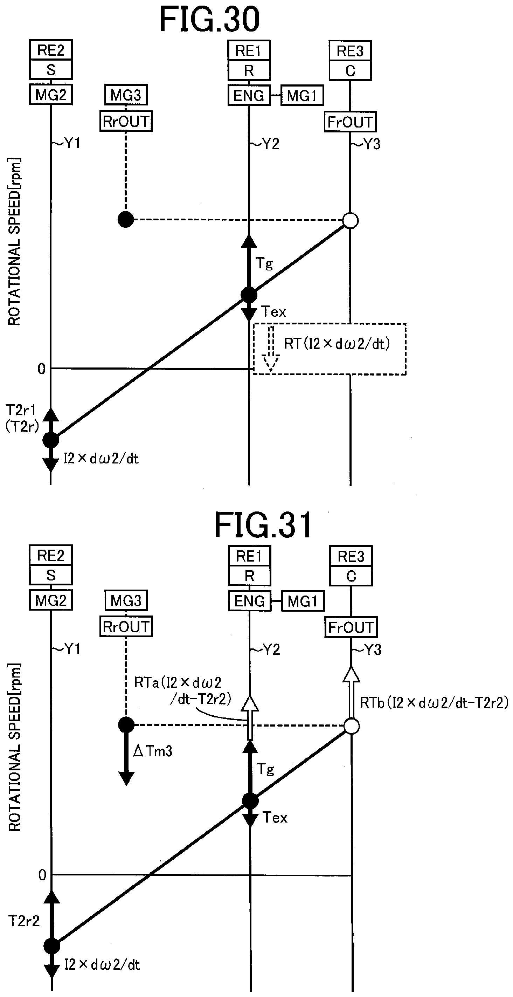

FIG 30 is a collinear diagram for explaining operations of the respective rotary elements in a case in which the second electric motor MG2 is caused to generate the resisting torque acting in a direction resisting the inertial torque $I2 \times d\omega 2/dt$, in the control for the running-stage engine start, which is executed by the electronic control apparatus 70. FIG 31 is a collinear diagram for explaining operations of the respective rotary elements in a case in which the second electric motor MG2 is caused to generate the engine-start accelerating torque larger than the inertial torque $I2 \times d\omega 2/dt$, in the

control for the running-stage engine start, which is executed by the electronic control apparatus 70.

As shown in FIGS. 30 and 31, in the present fourth embodiment, the first rotary element RE1 is the ring gear R instead of the carrier C, and the third rotary element RE3 is the carrier C instead of the ring gear R, compared to the above-described second embodiment. However, also in the present fourth embodiment, the inertia resisting torque T2r, inertia offsetting torque T2r1, engine-start accelerating torque T2r2, etc. are generated by the second electric motor MG2, and a torque loss upon start of the engine 20 is suppressed or a torque increase upon start of the engine 20 is intended. Further, preferably, where the engine-start accelerating torque T2r2 is generated, the vehicle-acceleration offsetting torque △Tm3 is generated by the third electric motor MG3, so that acceleration of the vehicle 500 is suppressed. That is, also in the present fourth embodiment in which the first rotary element RE1 is the ring gear R and the third rotary element RE3 is the carrier C, substantially the same control operation as in the second embodiment is performed.

As described above, in the present fourth embodiment, the same effects as those of the above-described first and second embodiments can be obtained.

While the preferred embodiments of this invention have been described in detail by reference to the drawings, it is to be understood that the invention may be otherwise embodied.

For example, in the differential mechanism 32 in the above-described first embodiment, the first rotary element RE1 may be any one of the ring gear R and the sun gear S, while the second rotary element RE2 may be is the other of the ring gear R and the sun gear S. Where the first rotary element RE1 is the sun gear S while the second rotary element RE2 is the ring gear R, the engine 20 and the first electric motor MG1 are connected to the sun gear S while the second electric motor MG2 is connected to the ring gear R.

In the differential mechanism 332 in the above-described second embodiment, the second rotary element RE2 may be any one of the sun gear S and the ring gear R, while the third rotary element RE3 may be the other of the sun gear S and the ring gear R. Where the second rotary element RE2 is the ring gear R while the third rotary element RE3 is the sun gear S, the second electric motor MG2 is connected to the ring gear R while the front drive shafts 38 are connected to the sun gear S.

In the differential mechanism 432 in the above-described third embodiment, the first rotary element RE1 may be any one of the carrier C and the sun gear S, while the second rotary element RE2 may be is the other of the carrier C and the sun gear S. Where the first rotary element RE1 is the sun gear S while the second rotary element RE2 is the carrier C, the engine 20 and the first electric motor MG1 are connected to the sun gear S while the second electric motor MG2 is connected to the carrier C.

In the differential mechanism 532 in the above-described fourth embodiment, the second rotary element RE2 may be any one of the sun gear S and the carrier C, while the third rotary element RE3 may be the other of the sun gear S and the carrier C. Where the second rotary element RE2 is the carrier C while the third rotary element RE3 is the sun gear S, the second electric motor MG2 is connected to the carrier C while the front drive shafts 38 are connected to the sun gear S.

As shown in the above-described first through fourth embodiments, the second rotary element RE2 is a rotary element located in one of opposite ends in the collinear diagram in which the three rotary elements of the differential mechanism are arranged in a straight line.

In the first through fourth embodiments, the power transmission mechanism 40 may be, for example, a pair of gears or a combination of chain and sprocket. Where the power transmission mechanism 40 is the pair of gears, the intermediate gear 40a and the first rotary element RE1 are connected to each other through a counter gear that meshes with the intermediate gear 40a and the first rotary element RE1.

In the first through fourth embodiments, the first electric motor MG1 may be disposed to be coaxial with the engine 20 and the second electric motor MG2. That is, the first electric motor MG1 may be disposed on the first axis CS1 that is the rotation axis of the differential mechanism 32.

In the first through fourth embodiments, the brake mechanism, which is configured to stop rotation of the first rotary element RE1, may be constituted by a one-way clutch in place of the brake BR.

In the first through fourth embodiments, the brake BR does not necessarily have to be provided. In a case without provision of the brake BR, among kinds of the Mode1, the Mode1_MG2_BRon is not executed. As described above, in the Mode1_MG3, the BEV driving can be performed even if the brake BR is not engaged, so that the Mode1_MG3 can be executed even if the brake BR is not provided.

In the first through fourth embodiments, first drive wheels, to which the power of each of the engine 20 and the second electric motor MG2 is transmitted, may be the rear wheels 12r rather than the front wheels 12f, while second drive wheels, to which the power of the third electric motor MG3 is transmitted, may be the front wheels 12f rather than the rear wheels 12r.

In the first through fourth embodiments, the drive portion including the third electric motor MG3 is the main drive portion in the PHEV in which it is expected that the BEV driving in the Mode1_MG3 will be used frequently. However, the drive portion including the engine 20 and the second electric motor MG2 may be the main drive portion in the HEV.

It is to be understood that the embodiments described above are given for illustrative purpose only, and that the present invention may be embodied with various modifications and improvements which may occur to those skilled in the art.

NOMENCLATURE OF ELEMENTS

8: vehicle
10: vehicle drive apparatus
12f: front wheel (first drive wheel)
12r: rear wheel (second drive wheel)
20: engine
32: differential mechanism
S: sun gear (second rotary element)
C: carrier (third rotary element)
R: ring gear (first rotary element)
38: front drive shaft (first drive shaft)
58: rear drive shaft (second drive shaft)
70: electronic control apparatus (control apparatus)
300: vehicle
310: vehicle drive apparatus
332: differential mechanism
S: sun gear (second rotary element)
C: carrier (first rotary element)
R: ring gear (third rotary element)
400: vehicle
410: vehicle drive apparatus
432: differential mechanism
S: sun gear (second rotary element)
C: carrier (first rotary element)
R: ring gear (third rotary element)
500: vehicle
510: vehicle drive apparatus
532: differential mechanism
S: sun gear (second rotary element)
C: carrier (third rotary element)
R: ring gear (first rotary element)
MG1: first electric motor
MG2: second electric motor
MG3: third electric motor
Tg: engine starting torque
$I2 \times d\omega2/dt$: inertial torque
T2r: inertia resisting torque (resisting torque resisting torque that acts in a direction resisting an inertial torque)
T2r1: inertia offsetting torque (offsetting torque that offsets that offsets the inertial torque)
T2r2: engine-start accelerating torque
$\Delta$Tm3: vehicle-acceleration offsetting torque (offsetting torque that offsets a fluctuated torque generated in the first drive shaft)
RE1: first rotary element
RE2: second rotary element
RE3: third rotary element
RTb ($I2 \times d\omega2/dt - T2r2$): fluctuated torque

**Claims**

1. A drive apparatus (10;310;410;510) for a vehicle (8;300;400;500), the drive apparatus (10;310;410;510) comprising:

   an engine (20);
   a first electric motor (MG1);

a second electric motor (MG2);
a third electric motor (MG3);
a differential mechanism (32;332;432;532);
a first drive shaft (38) for driving one of front and rear wheels (12f, 12r) of the vehicle (8;300;400;500);
a second drive shaft (58) for driving the other of the front and rear wheels (12f, 12r); and
a control apparatus (70) including a processor,
wherein the differential mechanism (32;332;432;532) includes a first rotary element (RE1), a second rotary element (RE2) and a third rotary element (RE3),
wherein the engine (20) and the first electric motor (MG1) are connected to the first rotary element (RE1), the second electric motor (MG2) is connected to the second rotary element (RE2), and the first drive shaft (38) is connected to the third rotary element (RE3),
wherein the third electric motor (MG3) is connected to the second drive shaft (58),
and wherein, when performing a running-stage engine start for starting the engine (20) during running of the vehicle (8;300;400;500), the processor is configured to cause the first electric motor (MG1) to generate an engine starting torque (Tg) and to cause the second electric motor (MG2) to generate a resisting torque (T2r) that acts in a direction resisting an inertial torque ($I2 \times d\omega2/dt$) generated in the second rotary element (RE2) due to change in a rotational speed of the second rotary element (RE2).

2. The drive apparatus (10;310;410;510) according to claim 1,
wherein, when performing the running-stage engine start, the processor is configured to cause the second electric motor (MG2) to generate, as the resisting torque (T2r), an offsetting torque (T2r1) that offsets the inertial torque ($I2 \times d\omega2/dt$).

3. The drive apparatus (10;310;410;510) according to claim 1,
wherein, when performing the running-stage engine start, the processor is configured to cause the second electric motor (MG2) to generate, as the resisting torque (T2r), an engine-start accelerating torque (T2r2) which is larger than the inertial torque ($I2 \times d\omega2/dt$) and which acts in the direction that resists the inertial torque ($I2 \times d\omega2/dt$).

4. The drive apparatus (10;310;410;510) according to claim 3,
wherein, when performing the running-stage engine start, the processor is configured to cause the third electric motor (MG3) to generate an offsetting torque ($\Delta Tm3$) that offsets a fluctuated torque (RTb ($I2 \times d\omega2/dt$-T2r2)) generated in the first drive shaft (38) due to generation of the engine-start accelerating torque (T2r2).

5. The drive apparatus (10;410) according to any one of claims 1-4,

wherein the differential mechanism (32;432) is constructed such that the first, second and third rotary elements (RE1,RE2,RE3) are to be rotated about a common axis (CS1) about which the engine (20) is to be rotated, and such that the third rotary element (RE3), which is connected to the first drive shaft (38), is to be rotated at a rotational speed that is intermediate between the rotational speed of the second rotary element (RE2) and a rotational speed of the first rotary element (RE1), and
wherein the resisting torque (T2r), which is generated by the second electric motor (MG2) when the running-stage engine start is performed, is controlled to act on the second rotary element (RE2) in a rotation direction that is opposite to a rotation direction of the engine (20) connected to the first rotary element (RE1).

6. The drive apparatus (310;510) according to any one of claims 1-4,

wherein the differential mechanism (332;532) is constructed such that the first, second and third rotary elements (RE1,RE2,RE3) are to be rotated about a common axis (CS1) about which the engine (20) is to be rotated, and such that the first rotary element (RE1) is to be rotated at a rotational speed that is intermediate between the rotational speed of the second rotary element (RE2) and a rotational speed of the third rotary element (RE3) that is connected to the first drive shaft (38), and
wherein the resisting torque (T2r), which is generated by the second electric motor (MG2) when the running-stage engine start is performed, is controlled to act on the second rotary element (RE2) in a rotation direction that is the same as a rotation direction of the engine (20) connected to the first rotary element (RE1).

FIG.1

# FIG.2

# FIG.3

10

70

72

80 — θacc

81 — V

82 — SOC

83 — BEVon

84 — POSop

85 — Nmg1

86 — Nmg2

87 — Nmg3

88 — Ne

89 — BPon

90 — θbp

91 — CRon

92 — TRon

PHEV-ECU

76

Tmg1tgt

Tmg2tgt

Tmg3tgt

MG-ECU

Smg1 (Img1)

Smg2 (Img2)

Smg3 (Img3)

62

θmg1 — 85

θmg2 — 86

θmg3 — 87

74

Tetgt

FCreq

ENG-ECU

Se(Qair)

Se(TMig)

Se(Qfi)

60

A/F — 93

Sbr — BR

# FIG.4

Mode1_MG2

# FIG.5

Mode1_MG2_BRon

# FIG.6

Mode1_MG3

# FIG.7A

# FIG.7B

# FIG.8A

Mode3

RE2 / S / MG2

MG3 / RrOUT

RE3 / C / FrOUT

RE1 / R / ENG — MG1

~Y1

~Y2

~Y3

ROTATIONAL SPEED[rpm]

Te

Tmg3

A

0

Tmg2

# FIG.8B

Mode3

RE2 / S / MG2

MG3 / RrOUT

RE3 / C / FrOUT

RE1 / R / ENG — MG1

~Y1

~Y2

~Y3

ROTATIONAL SPEED[rpm]

Te

Tmg3

Tmg2

0

# FIG.9A

Mode4

# FIG.9B

Mode4

# FIG.10

CD DRIVING

(+)

DRIVE POWER Fr[N]

Mode1

0

(+)

VEHICLE RUNNING SPEED V[km/h]

# FIG.11

CS DRIVING

(+)

DRIVE POWER Fr[N]

Mode1

Mode3

Mode2

Mode4

0

(+)

VEHICLE RUNNING SPEED V[km/h]

# FIG.12

CD DRIVING

ACCELERATOR OPENING DEGREE $\theta$acc[%]

(+)

Mode1

0

VEHICLE RUNNING SPEED V[km/h]

(+)

# FIG.13

CS DRIVING

ACCELERATOR OPENING DEGREE $\theta_{acc}$[%]

(+)

Mode3

Mode4

Mode1 or Mode2

0

VEHICLE RUNNING SPEED V[km/h]

(+)

# FIG.14

# FIG.15

# FIG.16

# FIG.17

START

S10 ENGINE MOTORING ?

No

Yes

S30 EARLY START REQUEST FOR ENGINE ?

No

Yes

S20 NO TORQUE GENERATION BY MG2 & MG3

S40 INERTIA OFFSETTING TORQUE T2r1 IS GENERATED BY MG2

S50 ENGINE-START ACCELERATING TORQUE T2r2 IS GENERATED BY MG2 AND VEHICLE-ACCELERATION OFFSETTING TORQUE ΔTm3 IS GENERATED BY MG3

RETURN

# FIG.18

# FIG.19

# FIG.20

# FIG.21

310

310f    332

AUXILIARY DRIVE PORTION    RE2(S)    RE1(C)    BR    FrOUT

MG2    ENG、MG1    RE3(R)

310r

MAIN DRIVE PORTION    RrOUT

MG3

GROUND

# FIG.22

# FIG.23

# FIG.24

# FIG.25

# FIG.26

# FIG.27

# FIG.28

# FIG.29

# FIG.30

# FIG.31

Europäisches
Patentamt

European
Patent Office

Office européen
des brevets

# EUROPEAN SEARCH REPORT

**Application Number**

EP 25 18 1792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2024/083409 A1 (KOZEKI TAKAHIRO [JP] ET AL) 14 March 2024 (2024-03-14) * abstract; figures 1-4 * | 1-4 | INV. B60K6/445 B60K6/448 B60K6/52 |
| Y | US 7 788 023 B2 (TOYOTA MOTOR CO LTD [JP]) 31 August 2010 (2010-08-31) * abstract; figures 1, 7 * * paragraph [0007] - paragraph [0008] * * paragraph [0042] - paragraph [0043] * * paragraph [0047] - paragraph [0051] * | 1-4 | B60W10/06 B60W10/08 B60W20/00 B60W20/17 B60W20/40 B60K6/26 |
| A | US 7 292 917 B2 (FORD GLOBAL TECH LLC [US]) 6 November 2007 (2007-11-06) | 1-6 | |
| A | US 7 357 204 B2 (AISIN AW CO [JP]) 15 April 2008 (2008-04-15) | 1-6 | |
| A | US 2003/017910 A1 (FATTIC GERALD THOMAS [US] ET AL) 23 January 2003 (2003-01-23) | 1-6 | |

**TECHNICAL FIELDS SEARCHED (IPC)**

B60K
B60W

The present search report has been drawn up for all claims

| Place of search | Date of completion of the search | Examiner |
|---|---|---|
| Munich | 9 October 2025 | Moroncini, Alessio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 25 18 1792

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | Publication date | Patent family member(s) | Publication date |
|---|---|---|---|
| US 2024083409 A1 | 14-03-2024 | CN 117681855 A | 12-03-2024 |
| | | JP 7439198 B1 | 27-02-2024 |
| | | JP 2024039476 A | 22-03-2024 |
| | | US 2024083409 A1 | 14-03-2024 |
| US 7788023 B2 | 31-08-2010 | CN 101267972 A | 17-09-2008 |
| | | EP 1964745 A1 | 03-09-2008 |
| | | JP 4193839 B2 | 10-12-2008 |
| | | JP 2007168496 A | 05-07-2007 |
| | | KR 20080068139 A | 22-07-2008 |
| | | US 2009256513 A1 | 15-10-2009 |
| | | WO 2007072798 A1 | 28-06-2007 |
| US 7292917 B2 | 06-11-2007 | DE 102005034794 A1 | 23-02-2006 |
| | | JP 4805624 B2 | 02-11-2011 |
| | | JP 2006036197 A | 09-02-2006 |
| | | US 2006030979 A1 | 09-02-2006 |
| US 7357204 B2 | 15-04-2008 | DE 102005004620 A1 | 15-09-2005 |
| | | JP 4596381 B2 | 08-12-2010 |
| | | JP 2005218280 A | 11-08-2005 |
| | | US 2005167170 A1 | 04-08-2005 |
| US 2003017910 A1 | 23-01-2003 | DE 60206217 T2 | 11-05-2006 |
| | | EP 1273822 A2 | 08-01-2003 |
| | | US 2003017910 A1 | 23-01-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018149917 A